# EUROPEAN PATENT SPECIFICATION

(11) **EP 2 388 057 B1**
(45) Date of publication and mention of the grant of the patent: **29.10.2014**
(21) Application number: 11152367.6
(22) Date of filing: 27.01.2011
(51) Int. Cl.: C04B 28/24, C04B 35/565, C04B 37/00, C04B 38/00, C04B 111/00, B01D 46/24

(54) **Honeycomb structured body and method for manufacturing a honeycomb structured body**
Wabenstrukturkörper und Herstellungsverfahren für einen Wabenstrukturkörper
Corps à structure en nid d'abeille et son procédé de fabrication

(30) Priority: 29.03.2010 WO PCT/JP2010/055614
(43) Date of publication of application: 23.11.2011
(73) Proprietor: Ibiden Co., Ltd., Ogaki-shi, Gifu 503-8604 (JP)
(72) Inventor: Kanai, Masanori, Gifu 501-0695 (JP)
(74) Representative: HOFFMANN EITLE

(56) References cited:
- EP-A1- 2 080 548
- JP-A- 4 367 574
- JP-A- 2002 102 627

## Description

### TECHNICAL FIELD

The present invention relates to a honeycomb structured body and a method for manufacturing a honeycomb structured body.

### BACKGROUND ART

Internal combustion engines of vehicles such as buses and trucks, construction machines, and the like discharge exhaust gas containing particulate matter (hereinafter, also referred to as PM) such as soot and other harmful matter, and harmfulness of this matter to the environment and human body has been a problem. Under such situation, there have been proposed various honeycomb structured bodies including porous ceramics as honeycomb filters that capture PM in exhaust gas to purify the exhaust gas, or as catalyst-supporting carriers that allow exhaust gas to pass therethrough to convert harmful matter in the exhaust gas.

There has been proposed a honeycomb structured body in which honeycomb fired bodies are bonded by interposing adhesive layers.
In the process of manufacturing the honeycomb structured body of this kind, spacers (gap-maintaining members) disclosed in Patent Documents 1 to 4 are used for maintaining the adhesive layers at a constant thickness upon the honeycomb fired bodies to manufacture a ceramic block.

Patent Document 1 discloses a method in which an adhesive paste layer is formed on the side face of a honeycomb fired body; a cardboard spacer is disposed on the adhesive paste layer; another honeycomb fired body is disposed on the adhesive paste layer and the spacer such that the two honeycomb fired bodies sandwich the spacer to maintain the adhesive paste layer at a constant thickness; and the honeycomb fired bodies are bonded to each other.

Patent Document 2 discloses a method in which the spacer is made from an inorganic material having substantially the same composition as an adhesive. Patent Document 3 discloses a honeycomb structured body having a spacer that is made from a porous ceramic, has a Young's modulus of 0.1 to 1.5 GPa, and has a porosity of 35 to 90%. Patent Document 4 discloses a honeycomb structured body having a spacer that is made from a nonflammable material and has a Young's modulus of 0.001 to 0.07 GPa.
Patent Document 1: JP-A 2002-102627
Patent Document 2: WO 2003/031371 A1
Patent Document 3: JP-A 2004-283669
Patent Document 4: WO 2008/155856 A1

JP 4 367 574 A describes a method for bonding a ceramic material combination. Therein, between opposing surfaces of two ceramic materials, an inorganic adhesive layer and a thinner inorganic spacer layer are arranged. In a process of hot-pressing, the thickness of said inorganic adhesive layer is reduced by plastic deformation to that of the thinner inorganic spacing layer. So, a firm cementation of the ceramic material is achieved.

### DISCLOSURE OF THE INVENTION

### PROBLEMS TO BE SOLVED BY THE INVENTION

In the case that a honeycomb structured body is used as an exhaust gas purifying filter, the honeycomb structured body after used for a predetermined period of time is subjected to a regenerating process in which captured PM is burnt to be removed from the honeycomb structured body. The regenerated honeycomb structured body is again used as an exhaust gas purifying filter. In the regenerating process, the honeycomb structured body is exposed to high temperature due to burning of PM.

The conventional spacer disclosed in Patent Document 1 disadvantageously disappears to form a void in the adhesive layer when the honeycomb structured body is exposed to high temperature in processes such as a regenerating process. On the other hand, the conventional spacers disclosed in Patent Documents 2 to 4 are made from inorganic materials, and thus the spacers do not disappear and do not form voids in the adhesive layers.
Further, the conventional spacers disclosed in Patent Documents 1 to 4 are used for maintaining the adhesive layers at a constant thickness. Thus, each spacer is disposed so as to be embedded in the adhesive layer with a predetermined size.

In the usual method for manufacturing a honeycomb structured body, an adhesive paste is applied to a side face of a honeycomb fired body in an amount such that the adhesive layer has the same thickness as a spacer after the honeycomb fired body and another honeycomb fired body are bonded to each other by interposing the adhesive layer. However, it is difficult to adjust the amount of the adhesive paste so that the adhesive layer has strictly the same thickness as the spacer. A smaller amount of the adhesive paste tends to cause space in the adhesive layer; thus, a slightly large amount of the adhesive paste is applied to the side face of the honeycomb fired body.

As a result, the adhesive paste tends to be pushed out toward an end face side when the honeycomb fired bodies are bonded to each other by interposing the adhesive paste layer and the adhesive paste sticks to the end face of the honeycomb fired body in these cases. If the adhesive paste sticks to the end face of the honeycomb fired body, a cell that should not be sealed of the honeycomb fired body is disadvantageously sealed.
In order to prevent sticking of the adhesive paste to the end face of the honeycomb fired body, a film is attached to the end face of the honeycomb fired body and is removed therefrom after the honeycomb fired bodies are bonded to each other. However, this technique makes the process complicated and increases the production cost.

The present invention is devised for solving the aforementioned problems. An object of the present invention is to provide a honeycomb structured body that is less likely to suffer problems such as sealing failure at an end face of the honeycomb fired body due to the adhesive paste pushed out toward the end face side of the honeycomb fired body, and in which a disposed member (edge member) is less likely to disappear under high temperature conditions such as the regenerating process. Another object of the present invention is to provide a method for easily and inexpensively manufacturing a honeycomb structured body in which the adhesive paste is less likely to be pushed out toward an end face side of the honeycomb fired body and thus which is less likely to suffer problems such as sealing failure at the end face of the honeycomb fired body.

### MEANS FOR SOLVING THE PROBLEMS

A honeycomb structured body according to claim 1 includes: honeycomb fired bodies each having a large number of cells longitudinally disposed in parallel with each other with a cell wall interposed therebetween, and each having side faces and end faces; adhesive layers disposed on the side faces and each adhesive layer bonding the honeycomb fired bodies to each other; and edge members disposed on the side faces, each side face that contacts the adhesive layer having a side A that is shared with one of the end faces, each edge member including an inorganic material, having a substantially quadrangular pillar shape with a side X that has substantially the same width as the side A, and being disposed such that the side X is brought close to the end face.

In the honeycomb structured body according to claim 1, the side X of the edge member has substantially the same width as the side face of the honeycomb fired body, and is brought close to the end face of the honeycomb fired body. Thus, the adhesive paste is prevented from leaking across the edge member, and the honeycomb structured body does not suffer sealing failure at the end face of the honeycomb fired body due to sticking of the adhesive paste to the end face of the honeycomb fired body, in other words, portions (cells) that should not be sealed of the honeycomb fired body are not sealed and the adhesive paste does not stick to cells that should not be sealed. As a result, the honeycomb structured body of the present invention sufficiently serves as a filter that captures PM in exhaust gas to purify the exhaust gas. As mentioned above, the edge member of the present invention prevents leakage of the adhesive paste; thus, it is also referred to as a leakage inhibitor.

In addition, since the edge member of the honeycomb structured body according to claim 1 includes an inorganic material, the edge member does not disappear during processes such as the regenerating process and defects such as space do not occur in the portion where the edge member or the adhesive layer is disposed. Thus, the honeycomb structured body prevents defects such as crackings starting from the space formed in the portion where the edge member or the adhesive layer used to be disposed due to expansion and shrinkage of the honeycomb fired body, the edge member, and/or the adhesive layer when they are exposed to high temperature during processes such as the regenerating process.

The following will describe the edge member.

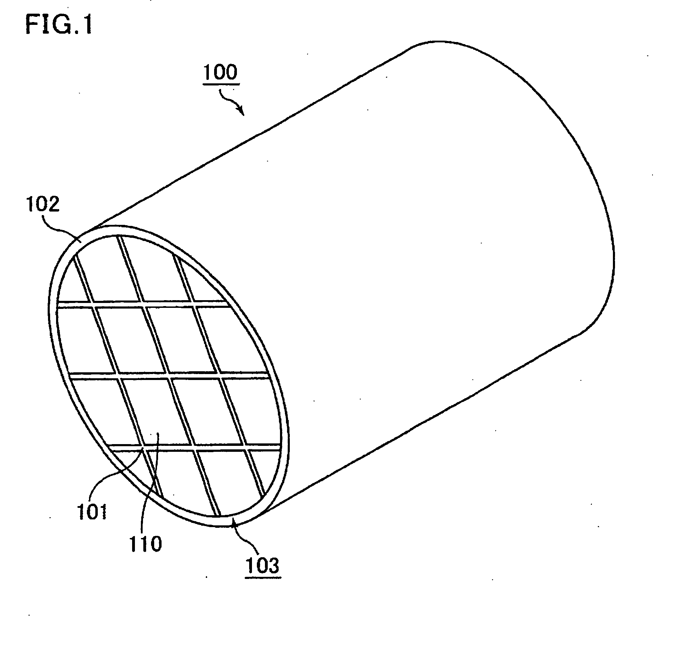

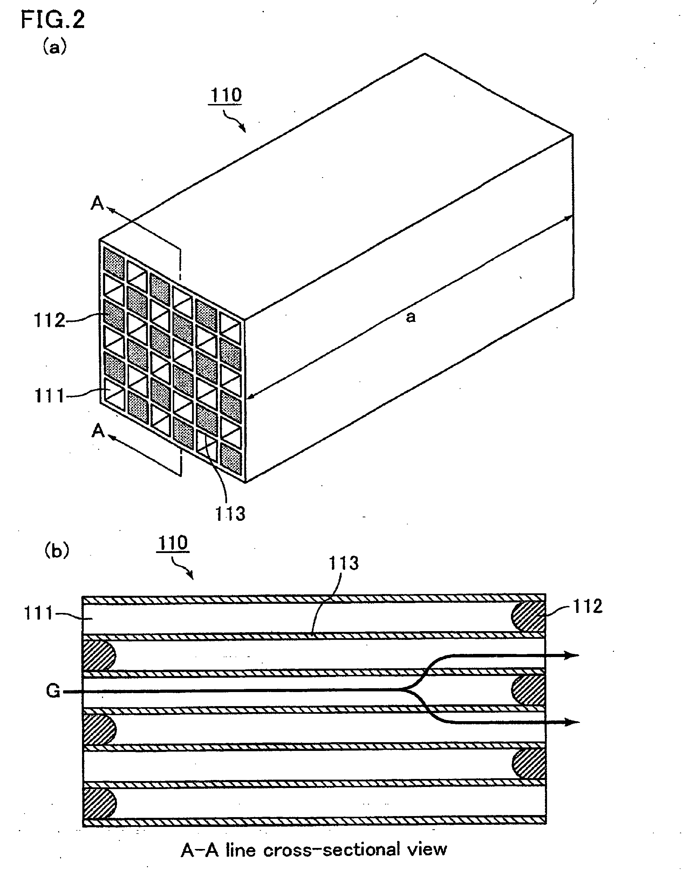

Fig. 1 is a schematic perspective view showing one example of the honeycomb structured body according to one embodiment of the present invention. Fig. 2(a) is a schematic perspective view showing one example of the honeycomb fired body that constitutes the honeycomb structured body shown in Fig. 1. Fig. 2(b) is an A-A line cross-sectional view of the honeycomb fired body shown in Fig. 2(a).

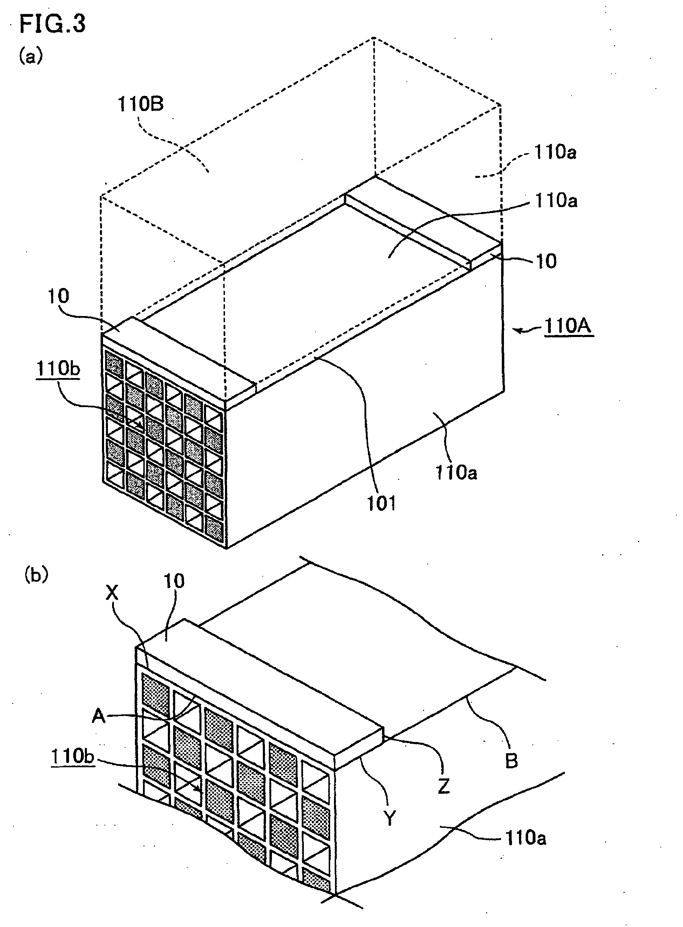

Fig. 3(a) is a schematic perspective view showing a state in which an adhesive layer and edge members are disposed on the side face of the honeycomb fired body shown in Fig. 2(a). Fig. 3(b) is an enlarged schematic perspective view showing the vicinity of one of the edge members shown in Fig. 3(a), wherein only the lower honeycomb fired body is illustrated.

The honeycomb structured body 100 shown in Fig. 1 includes honeycomb fired bodies 110 each having the structure shown in Figs. 2(a) and 2(b). These honeycomb fired bodies 110 are bonded to each other by interposing adhesive layers 101 to form a ceramic block 103. This ceramic block 103 has a coating layer 102 on its periphery.

The honeycomb fired body 110 shown in Figs. 2(a) and 2(b) includes a large number of cells 111 longitudinally (the direction indicated by a in Fig. 2(a)) disposed in parallel with each other with a cell wall 113 interposed therebetween, and either one end of each cell 111 is sealed with a plug 112. Thus, exhaust gas G flowing into one cell 111 that has an opening on one end face of the honeycomb fired body 110 always passes through the cell wall 113 separating the cell 111 from an adjacent cell, and then flows out from other cells 111 that has an opening on the other end face of the honeycomb fired body 110.
Therefore, the cell wall 113 serves as a filter for capturing PM and the like matter.

In the honeycomb structured body 100, the adhesive layer 101 is formed between a side face 110a of a quadrangular pillar-shaped honeycomb fired body 110A illustrated with a solid line and a side face 110a of a quadrangular pillar-shaped honeycomb fired body 110B illustrated with a dot line in Fig. 3 (a). This adhesive layer bonds the two honeycomb fired bodies 110A and 110B to each other.

As shown in Figs. 3(a) and 3(b), the side face 110a of the honeycomb fired body 110 has a substantially rectangular shape that has a side A shared with an end face 110b of the honeycomb fired body 110 and a side B perpendicular to the side A. Two edge members 10 are disposed on this side face 110a of the honeycomb fired body 110. These two edge members 10 each have a substantially quadrangular pillar shape, having a side X that has substantially the same width as the side A of the side face 110a, a side Y in the width direction, and a side Z in the thickness direction. The edge members each are disposed such that the XY plane contacts the side face 110a and the side X is brought close to the end face 110b of the honeycomb fired body 110.
The term "a substantially quadrangular pillar shape" herein means that shapes close to a quadrangular pillar shape are included in its scope. For example, a substantially quadrangular pillar shape includes a shape in which a corner portion of a quadrangle formed by cutting the edge member 10 in the plane parallel to the side face 110a with the edge member 10 bonded thereto is chamfered with a curved line or a straight line.
The side X of the edge member 10 is preferably located at a distance of 3 mm or less from the side A (end face 110b) shared between the side face 110a and the end face, more preferably at a distance of 1 mm or less from the end face (end face 110b), and is further preferably shared with the end face (end face 110b).
The side X is preferably separated from the side A (end face 110b) by 3 mm or less from the viewpoint of sufficient strength of the honeycomb structured body. The reason why the side X is preferably separated from the end face (end face 110b) by 1 mm or less is that a distance of 1 mm or less from the end face (end face 110b) does not cause deterioration in performance of the honeycomb structured body, such as pressure loss. In the case that the honeycomb structured body is used as a catalyst-supporting carrier, the side X is preferably shared with the end face of the honeycomb fired body.

The edge member 10 may be disposed for the purpose of maintaining the adhesive layer 101 at a constant thickness. In this case, the adhesive layer 101 preferably has substantially the same constant thickness as the edge member 10. In the case that the edge member 10 maintains the adhesive layer at a predetermined thickness as mentioned here, the edge member 10 also serves as a spacer (gap-maintaining member).

The edge member 10 of the present invention may be a solidified adhesive paste. In other words, it may be one formed by applying a substance having substantially the same composition as the adhesive paste to the vicinity of the end face on the side face 110a of the honeycomb fired body 110 as shown in Fig. 3(a) and then solidifying the substance. The degree of solidification is not particularly limited, and may be such that the edge member 10 does not flow to stick to the end face of the honeycomb fired body 110 when the honeycomb fired bodies 110A and 110B are bonded to each other and that the edge member 10 prevents the adhesive paste to be applied later from leaking toward the end face side of the honeycomb fired bodies.

Alternatively, the edge member 10 of the present invention may include a nonflammable material. In this case, the edge member may be one prepared by applying a substance that serves as an adhesive paste to the main face of a sheet material having a substantially quadrangular pillar shape as shown in Fig. 3(a), and by attaching it to the vicinity of the end face on the side face 110a of the honeycomb fired body 110A by interposing the adhesive paste.

Alternatively, the edge member 10 of the present invention may include the same material as the honeycomb fired body 110. In this case, the edge member may be one formed in the vicinity of the end face on the side face 110a of a honeycomb molded body so as to have a shape of the edge member and then fired so as to be integrated with the honeycomb fired body.

Alternatively, the edge member 10 of the present invention may be a paste having a higher viscosity than the aforementioned adhesive paste. In this case, the edge member may be a paste that does not flow to stick to the end face of the honeycomb molded body when the edge member 10 is formed in the vicinity of the end face on the side face of the honeycomb molded body, that sufficiently prevents leakage of the adhesive paste, and that may have a substantially quadrangular pillar shape as shown in Fig. 3(a).
In the case that a highly viscous paste is used as the edge member 10, the highly viscous paste is dried and solidified to serve as a solidified edge member.

The edge member 10 of the present invention is disposed between the two honeycomb fired bodies 110A and 110B, and may be used in combination with a spacer (gap-maintaining member). In this case, the edge member 10 and the spacer (gap-maintaining member) are disposed on different positions, and are not disposed on the same position.

In the case that the edge member is not a highly viscous paste, the edge member paste and the adhesive paste are solidified at different timings. Thus, a border line is formed between the edge member and the adhesive layer. Specifically, the border line is observed in an SEM photograph of the cross section of the honeycomb fired body with the edge member and the adhesive layer formed thereon, although the edge member and the adhesive layer are bonded to each other. This cross section is formed by crosscutting the honeycomb fired body with the edge member and the adhesive layer formed thereon in the longitudinal direction.

In the honeycomb structured body according to claim 2, the edge members are disposed on both edge portions of every side face with the adhesive layer formed thereon of the honeycomb fired bodies such that the side X is shared with the end face of the honeycomb fired body.

Since the edge members are disposed on both edge portions of every side face with the adhesive layer formed thereon such that the side X is shared with the end face of the honeycomb fired body in the honeycomb structured body according to claim 2, the honeycomb structured body does not suffer problems such as sealing failure at all the end faces of the honeycomb fired bodies, and all the cells that should be open are open. Thus, the honeycomb structured body sufficiently serves as a filter that captures PM in exhaust gas to purify the exhaust gas. Since the formed edge member contacts the end face of the honeycomb fired body, the whole end face of the honeycomb structured body is formed to have a flat surface.
As a result, the honeycomb structured body is less likely to suffer deterioration of the performance such as pressure loss.

The edge member of the honeycomb structured body according to claim 3 includes inorganic particles B and inorganic fibers B. Thus, the edge member has elasticity. In addition, the honeycomb structured body prevents defects such as crackings inside the edge member or the adhesive layer due to expansion and shrinkage of the honeycomb fired body, the edge member, and/or the adhesive layer when they are exposed to high temperature during processes such as the regenerating process; also, the honeycomb structured body has excellent mechanical properties as a whole.

The edge member of the honeycomb structured body according to claim 4 further includes solid matter of an inorganic binder. Thus, the edge member easily keeps its shape, is easily manufactured, and is easily disposed on the side face of the honeycomb fired body. In addition, the edge member of this kind has excellent adhesiveness to the honeycomb fired body.

The edge member of the honeycomb structured body according to claim 5 has substantially the same composition as the adhesive layer. Thus, the edge member has substantially the same mechanical properties as the adhesive layer. As a result, the honeycomb structured body is less likely to suffer defects such as crackings inside the edge member or the adhesive layer even when thermal stress is generated in the edge member or the adhesive layer due to expansion and shrinkage of the honeycomb fired body, the edge member, and/or the adhesive layer when they are exposed to high temperature during processes such as the regenerating process.

The edge member of the honeycomb structured body according to claim 6 further includes inorganic particles D or a layered inorganic material.

The honeycomb fired body that is located at a peripheral portion of the honeycomb structured body according to claim 7 has a peripheral wall on a peripheral portion of the honeycomb fired body.
Thus, use of this honeycomb fired body enables manufacturing of the honeycomb structured body with a predetermined shape only by bonding the honeycomb fired bodies by interposing the adhesive paste and solidifying the adhesive paste, and without the process of cutting the peripheral portion of the ceramic block (honeycomb aggregate).

A method for manufacturing a honeycomb structured body according to claim 8 provides a honeycomb structured body that includes honeycomb fired bodies each having a large number of cells longitudinally disposed in parallel with each other with a cell wall interposed therebetween and each having side faces and end faces, adhesive layers disposed on the side faces and each adhesive layer bonding the honeycomb fired bodies, and edge members disposed on the side faces, the method including:
disposing the edge members, each edge member has a substantially quadrangular pillar shape having a side X, on the side faces, each side face having a side A that is shared with one of the end faces of the honeycomb fired body and that has substantially the same width as the side X, such that the side X is brought close to the side A;
manufacturing a honeycomb aggregate by bonding the honeycomb fired bodies with the edge members disposed thereon by interposing adhesive paste layers; and
solidifying the adhesive paste layers to form the adhesive layers.

In the method for manufacturing a honeycomb structured body according to claim 8, the adhesive paste is not pushed out to the end face side of the honeycomb fired body across the edge member upon manufacturing a honeycomb aggregate, and thus the adhesive paste does not attach to the end face of the honeycomb fired body. As a result, sealing failure is less likely to occur that is caused by the adhesive paste sealing or attaching to cells that should be open of the honeycomb fired body.
In addition, since the edge member of the obtained honeycomb structured body includes an inorganic material, it does not disappear even when exposed to high temperature during processes such as the regenerating process. Thus, the honeycomb structured body prevents defects caused by disappearance of the edge member such as crackings starting from the space formed inside the edge member or the adhesive layer due to expansion and shrinkage of the honeycomb fired body, the edge member, and/or the adhesive layer when they are exposed to high temperature during processes such as the regenerating process.

In the method for manufacturing a honeycomb structured body according to claim 9, the manufacturing a honeycomb aggreagate includes:
applying an adhesive paste to one of the side faces of a first one of the honeycomb fired bodies with the edge members disposed thereon;
bonding one of the side faces of a second one of the honeycomb fired bodies to the adhesive paste applied to the one of the side faces of the first one of the honeycomb fired bodies; and
repeating the applying and the bonding to manufacture a honeycomb aggregate.

In the method for manufacturing a honeycomb structured body according to claim 9, the honeycomb aggregate is manufactured by repeating the applying of an adhesive paste and the bonding. During these steps, the adhesive paste is not pushed out to the end face side of the honeycomb fired body across the edge member. Thus, sealing failure of the honeycomb fired body is less likely to occur that is caused by the adhesive paste sealing or attaching to cells that should be open of the honeycomb fired body.

In the method for manufacturing a honeycomb structured body according to claim 10, the manufacturing a honeycomb aggreagate includes:
jointing the honeycomb fired bodies with the edge members disposed thereon by interposing the edge members to manufacture a honeycomb jointed body;
housing the honeycomb jointed body in a jointed body-housing container that is a part of an adhesive-filling apparatus; and
filling an adhesive paste into gaps formed between the honeycomb fired bodies of the honeycomb jointed body to form layers to be adhesive layers.

In the method for manufacturing a honeycomb structured body according to claim 10, the edge member is used for bonding and jointing the honeycomb fired bodies to each other to form a shape of the honeycomb structured body while separating them at a constant distance, and thereafter the adhesive paste is charged at one time into the gaps formed between the honeycomb fired bodies to form the adhesive layers. Thus, sealing failure is less likely to occur at the end face of the honeycomb fired body as mentioned above, and the honeycomb structured body is efficiently manufactured.

In the method for manufacturing a honeycomb structured body according to claim 11, the manufacturing a honeycomb aggreagate includes:
jointing the honeycomb fired bodies with the edge members disposed thereon by interposing the edge members to manufacture a honeycomb jointed body;
preparing a jointed body-housing container that is a part of an adhesive-filling apparatus and that is designed to have a size such that the honeycomb jointed body and the jointed body-housing container form a gap having a predetermined distance therebetween;
housing the honeycomb jointed body in the jointed body-housing container to form the gap having a predetermined distance between the honeycomb jointed body and the jointed body-housing container; and
filling an adhesive paste into gaps between the honeycomb fired bodies of the honeycomb jointed body and into the gap between the honeycomb jointed body and the jointed body-housing container to form layers to be adhesive layers and a layer to be a coating layer.

In the method for manufacturing a honeycomb structured body according to claim 11, the edge member is used for jointing (bonding) the honeycomb fired bodies to each other to form a shape of the honeycomb structured body while separating them at a constant distance, and thereafter the adhesive paste is charged at one time into the gaps formed between the honeycomb fired bodies to form the adhesive layers, and further the adhesive paste is applied to the periphery to form the coating layer. As a result, sealing failure is less likely to occur at the end face of the honeycomb fired body as mentioned above, and the honeycomb structured body is more efficiently manufactured.
In addition, the adhesive paste to be a coating layer is also solidified when the adhesive paste is solidified. Thus, the coating layer is simultaneously formed upon forming the adhesive layers, and the honeycomb structured body is more efficiently manufactured.

In the method for manufacturing a honeycomb structured body according to claim 12, the edge members are disposed on both edge portions of every side face with the adhesive layer formed thereon of the honeycomb fired bodies such that a side X is shared with the end face of the honeycomb fired body.
Thus, at every end face portion of the honeycomb fired bodies the adhesive paste does not stick to the end face of the honeycomb fired body, and cells that should be open of the honeycomb fired body are open and no adhesive paste is filled into or sticks to the cells that should be open of the honeycomb fired body in the provided honeycomb structured body. As a result, the honeycomb structured body sufficiently serves as a filter that captures PM in exhaust gas to purify the exhaust gas. In addition, since the formed edge member contacts the end face of the honeycomb fired body, the whole end face of the provided honeycomb structured body has a flat surface.
Thus, the honeycomb structured body is less likely to suffer deterioration of the performance such as pressure loss.

In the method for manufacturing a honeycomb structured body according to claim 13, the edge member is bonded to the side face by interposing the adhesive paste. Thus, the edge member is appropriately bonded to the side face of the honeycomb fired body and the bottom of the edge member and the side face of the honeycomb fired body are bonded to each other by interposing the adhesive paste. As a result, the edge member is prevented from displacing from a predetermined position.

In the method for manufacturing a honeycomb structured body according to claim 14, the edge member is a highly viscous paste. Since the edge member is a highly viscous paste, the edge member is appropriately bonded to the side face of the honeycomb fired body, and the edge member is easily disposed on the side face of the honeycomb fired body. In addition, even though the edge member is in a paste state, adhesive strength between the side face of the honeycomb fired body and the highly viscous edge member prevents the adhesive paste from leaking toward the end face of the honeycomb fired body.

In the method for manufacturing a honeycomb structured body according to claim 15, the edge member includes inorganic particles B and inorganic fibers B. Thus, the edge member has elasticity, and the honeycomb structured body is less likely to suffer problems such as crackings in the edge member or the adhesive layer due to expansion and shrinkage of the honeycomb fired body, the edge member, and/or the adhesive layer when they are exposed to high temperature in processes such as the regenerating process. As a result, this method provides a honeycomb structured body that is also excellent in mechanical properties as a whole.

In the method for manufacturing a honeycomb structured body according to claim 16, the edge member further includes an inorganic binder. Thus, the edge member is likely to keep its shape easily, the edge member is more easily manufactured, and the edge member is easily disposed on the side face of the honeycomb fired body. Further, the edge member is allowed to have excellent adhesiveness to the honeycomb fired body.

In the method for manufacturing a honeycomb structured body according to claim 17, the edge member has substantially the same composition as the adhesive layer. Thus, the edge member has substantially the same mechanical properties as the adhesive layer. As a result, the provided honeycomb structured body is less likely to suffer defects such as crackings inside the edge member or the adhesive layer even when thermal stress is generated in the edge member or the adhesive layer due to expansion and shrinkage of the honeycomb fired body, the edge member, and/or the adhesive layer when they are exposed to high temperature during processes such as the regenerating process.

In the method for manufacturing a honeycomb structured body according to claim 18, the edge member further includes inorganic particles D or a layered inorganic material.

In the method for manufacturing a honeycomb structured body according to claim 19, a honeycomb fired body that is located at a peripheral portion of the honeycomb structured body has a peripheral wall on a peripheral portion of the honeycomb fired body. In the case that the honeycomb fired body of this kind is used, the honeycomb structured body having a predetermined shape is manufactured only by bonding the honeycomb fired bodies by interposing an adhesive paste and solidifying the adhesive paste, and without the process of cutting the peripheral portion of the ceramic block (honeycomb aggregate).

The method for manufacturing a honeycomb structured body according to claim 20 further includes cutting the honeycomb aggregate to form a peripheral portion after the adhesive paste layer is solidified. This cutting enables manufacturing of a honeycomb structured body with a predetermined shape.

The method for manufacturing a honeycomb structured body according to claim 21 further includes forming a coating layer on the periphery after the cutting. This formation of the coating layer enables manufacturing of a honeycomb structured body that does not suffer problems such as gas leakage at the peripheral portion.

In the method for manufacturing a honeycomb structured body according to claim 22, the edge member is a paste having a viscosity of 60 to 100 Pa·s. Thus, the edge member is easily fixed on the side face of the honeycomb fired body. In addition, adhesive strength between the bottom of the edge member and the side face of the honeycomb fired body is likely to prevent displacement of the edge member. As a result, a honeycomb aggregate is easily manufactured.

In the method for manufacturing a honeycomb structured body according to claim 23, the edge member is a solidified matter or a fired matter having a predetermined shape.

### BRIEF DESCRIPTION OF THE DRAWINGS

Fig. 1 is a schematic perspective view showing one example of the honeycomb structured body according to one embodiment of the present invention.
Fig. 2(a) is a schematic perspective view showing one example of the honeycomb fired body that constitutes the honeycomb structured body according to one embodiment of the present invention shown in Fig. 1, and Fig. 2(b) is an A-A line cross-sectional view of the honeycomb fired body shown in Fig. 2(a).
Fig. 3(a) is a schematic perspective view showing the state that the adhesive layer and the edge member are disposed on the side face of the honeycomb fired body shown in Fig. 2(a), and Fig. 3(b) is an enlarged schematic perspective view of the vicinity of the edge member shown in Fig. 3(a).
Figs. 4(a) to 4(d) are schematic explanatory views showing one example of the procedure of manufacturing the honeycomb structured body according to the first embodiment of the present invention.
Figs. 5(e) to 5(h) are schematic explanatory views showing another example of the procedure of manufacturing the honeycomb structured body according to the first embodiment of the present invention.
Fig. 6 is a schematic perspective view showing one example of the honeycomb structured body according to the fifth embodiment of the present invention.
Fig. 7(a) is a schematic perspective view showing one example of the honeycomb fired body that constitutes the honeycomb structured body of the present invention shown in Fig. 6, and Fig. 7(b) is an A-A line cross-sectional view showing the honeycomb fired body shown in Fig. 7(a).
Fig. 8 is a schematic cross-sectional view showing the state of forming an edge member and an adhesive paste layer on the honeycomb fired body with a V-profile stage according to the fifth embodiment of the present invention.
Fig. 9 is a schematic perspective view showing one example of the honeycomb structured body according to the sixth embodiment of the present invention.
Fig. 10 is a schematic perspective view showing one example of the honeycomb fired body disposed on the peripheral portion of the honeycomb structured body according to the sixth embodiment of the present invention.
Figs. 11(a) to 11(h) are schematic explanatory views showing one example of the procedure of manufacturing the honeycomb structured body according to the sixth embodiment of the present invention.
Figs. 12(i) to 12(l) are schematic explanatory views showing one example of the procedure of manufacturing the honeycomb structured body according to the sixth embodiment of the present invention.
Fig. 13 is an enlarged side view showing the honeycomb jointed body shown in Fig. 12(j).

### MODES FOR CARRYING OUT THE INVENTION

### (First embodiment)

The following will describe the first embodiment that is one embodiment of the present invention referring to the drawings.
The present embodiment illustrates the case in which the honeycomb fired body that constitutes the honeycomb structured body is a porous silicon carbide, and the edge member 10 is a solidified one having substantially the same composition as the adhesive paste.

In this case, the edge member preferably includes inorganic particles A, an inorganic binder, an organic binder, and at least one of inorganic fibers A, whiskers, a scaly inorganic material, and a layered inorganic material.

Examples of the inorganic binder in the edge member include silica sol, alumina sol, and the like. Each of these may be used alone or two or more of these may be used in combination. The inorganic binder is preferably silica sol. The lower limit of the amount of the inorganic binder (as solids content) is preferably 1% by weight, and more preferably 5% by weight. The upper limit of the amount of the inorganic binder (as solids content) is preferably 30% by weight, and more preferably 15% by weight.

Examples of the organic binder in the edge member include polyvinyl alcohol, methyl cellulose, ethyl cellulose, carboxymethyl cellulose, and the like. Each of these may be used alone or two or more of these may be used in combination. The organic binder is preferably carboxymethyl cellulose. The lower limit of the amount of the organic binder is preferably 0.1% by weight, and more preferably 0.2% by weight. The upper limit of the amount of the organic binder is preferably 5.0% by weight, and more preferably 1.0% by weight.

Examples of the inorganic fibers A in the edge member include fibers of silica-alumina, mullite, alumina, silica, and the like. The inorganic fibers A may be bio-soluble fibers. Each of these may be used alone or two or more of these may be used in combination. The inorganic fibers A are preferably alumina. The lower limit of the amount of the inorganic fibers A is preferably 10% by weight, and more preferably 20% by weight. The upper limit of the amount of the inorganic fibers A is preferably 70% by weight, and more preferably 40% by weight.

Examples of the whiskers include whiskers of alumina, silica, silicon carbide, silica-alumina, glass, potassium titanate, aluminum borate, silicon nitride, boron nitride, and the like.

Examples of the scaly inorganic material or the layered inorganic material include: graphite; smectite clay minerals such as montmorilionite and saponite; layered phosphates such as kaolinite clay minerals and layered zirconium phosphate; layered transition metal oxysalts; layered double hydroxides such as hydrotalcite; layered silicates such as magadiite and kanemite; mica minerals such as white mica, black mica, bronze mica, aluminoceladonite, roscoelite, paragonite, and eastonite; metal phosphates; and the like. Each of the scaly inorganic material and the layered inorganic material may be used alone or two or more of these may be used in combination.

Examples of the inorganic particles A in the edge member include carbides, nitrides, and the like. Specific examples thereof include inorganic powders of silicon carbide, silicon nitride, boron nitride, and the like. The inorganic particles A may be a granulated scaly inorganic material or a granulated layered inorganic material. Each of these may be used alone or two or more of these may be used in combination. The inorganic particles A are preferably silicon carbide particles due to their excellent thermal conductivity. The lower limit of the amount of the inorganic particles A is preferably 3% by weight, and more preferably 10% by weight. The upper limit of the amount of the inorganic particles A is preferably 80% by weight, and more preferably 60% by weight.

The edge member may further contain a pore-forming agent, if necessary, such as balloons that are fine hollow spheres containing oxide ceramics, spherical acrylic particles, and graphite. The balloons are not particularly limited. Examples thereof include alumina balloons, glass micro balloons, shirasu balloons, fly ash balloons (FA balloons), mullite balloons, and the like. Preferable among these are alumina balloons.

In the honeycomb structured body according to the present embodiment, the edge member 10 is formed as follows: a paste having substantially the same composition as the adhesive paste is applied to the vicinity of the end face on the side face of the honeycomb fired body with a metal mask, a nozzle, or the like tool in a substantially quadrangular pillar shape as shown in Figs. 3(a) and 3(b), and then the paste is dried and solidified.

In the present embodiment, the edge member 10 (solidified product of the paste) having a substantially quadrangular pillar shape with a side X that has substantially the same width as the side A of the side face 110a is disposed. Thus, an adhesive paste applied to the side face of the honeycomb fired body upon the below-mentioned production of a honeycomb structured body (honeycomb aggregate) is prevented from leaking toward the end face side of the honeycomb fired body across the edge member 10, and is prevented from sticking to the end face of the honeycomb fired body. As a result, the honeycomb structured body does not suffer sealing failure at the end face portions of the honeycomb fired body due to sticking of the adhesive paste to the end face of the honeycomb fired body. In other words, portions (cells) that should not be sealed of the honeycomb fired body are not sealed or the adhesive paste does not stick to the cells that should not be sealed of the honeycomb fired body. Accordingly, the provided honeycomb structured body 100 surely serves as a filter for capturing PM in exhaust gas to purify the exhaust gas.

The adhesive paste in the present embodiment is prepared from the same paste as for an edge member, and has the same composition, as the edge member. In other words, the pastes for an edge member and for an adhesive layer both have substantially the same composition, but dried and solidified at different timings. The edge member paste is first dried and solidified, and thereby the adhesive paste is prevented from leaking from the edge portion of the honeycomb fired body when honeycomb fired bodies are jointed to form a honeycomb aggregate. Thereafter, the adhesive paste is dried and solidified.

Since the edge member and the adhesive layer have substantially the same composition, problems such as crackings are less likely to occur in the edge member or the adhesive layer due to expansion and shrinkage of the honeycomb fired body, the edge member, and/or the adhesive layer when they are exposed to high temperature in processes such as the regenerating process. In addition, the adhesive paste does not stick to the end face of the honeycomb fired body. As a result, the provided honeycomb structured body is highly reliable.

Since the edge member 10 in the present embodiment is a solidified product of the paste containing an inorganic material, the edge member 10 does not disappear even when the honeycomb structured body is exposed to high temperature in processes such as the regenerating process. Thus, no defect such as space occurs in a portion where the edge member or the adhesive layer is disposed inside the honeycomb structured body 100. In other words, the honeycomb structured body prevents defects such as crackings starting from the space inside the edge member or the adhesive layer due to expansion and shrinkage of the honeycomb fired body, the edge member, and/or the adhesive layer when they are exposed to high temperature in processes such as the regenerating process.

The following will describe a method for manufacturing the honeycomb structured body according to the present embodiment.
First, silicon carbide powders each having a different average particle diameter as ceramic materials, an organic binder, a plasticizer, a lubricant, water, and the like are mixed to provide a wet mixture for manufacturing a molded body.

The wet mixture is charged into an extrusion-molding apparatus and is extrusion-molded. Thereby, a honeycomb molded body with a predetermined shape is manufactured.

The honeycomb molded body is cut at both ends into a predetermined length with a cutting apparatus, and the cut honeycomb molded body is dried with a drying apparatus. A predetermined amount of a plug material paste that is to be a plug is filled into ends on the gas outlet side of the cells each of which is to have an opening on the end face at the gas inlet side and into ends on the gas inlet side of the cells each of which is to have an opening on the end face of the gas outlet side. Thereby, the cells are sealed. Here, the wet mixture is used as the plug material paste.
As a result of these steps, a cell-sealed honeycomb molded body is manufactured.

Next, the cell-sealed honeycomb molded body is heated to be degreased in a degreasing furnace so that organic substances therein are removed. The degreased cell-sealed honeycomb molded body is put into a firing furnace and fired therein. Thereby, a honeycomb fired body is manufactured.

The aforementioned steps are followed by the steps of:
disposing the edge members each having a substantially quadrangular pillar shape with a side X on the side face of one honeycomb fired body having a side A that is shared with the end face thereof, the side X having substantially the same width as the side A, such that the side X of each edge member is brought close to the side A;
applying the adhesive paste to the side face of the honeycomb fired body with the edge members disposed thereon;
bonding the side face of another honeycomb fired body to the adhesive paste applied on the side face of the one honeycomb fired body;
repeating the disposing, the applying, and the bonding to provide a honeycomb aggregate with the honeycomb fired bodies bonded to each other by interposing the adhesive paste layers; and
solidifying the adhesive paste layers to form adhesive layers.

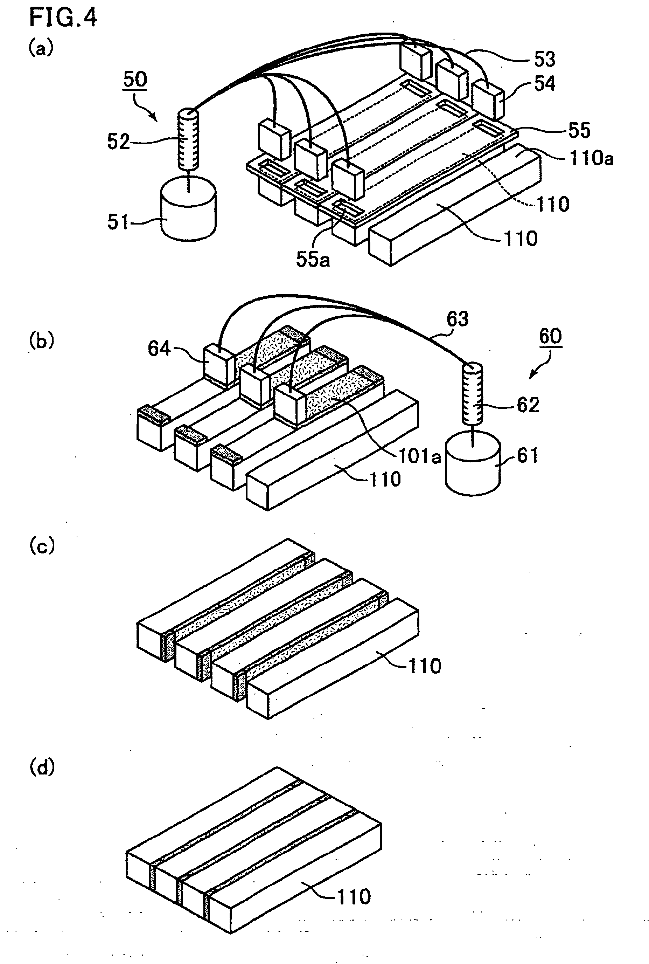

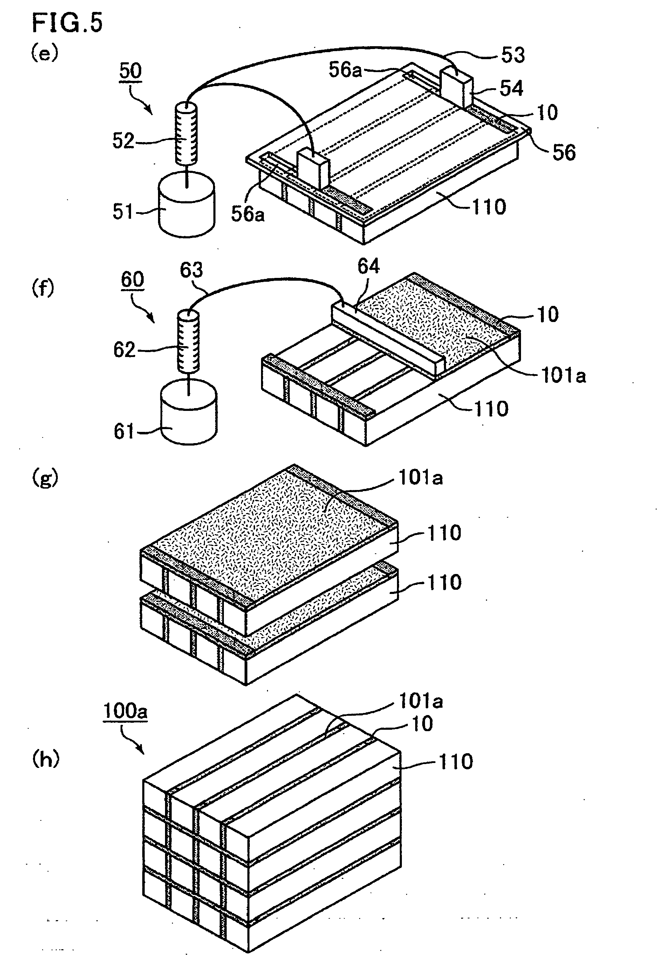

Figs. 4(a) to 4(d) and Figs. 5(e) to 5(h) are schematic explanatory views each showing one embodiment of carrying out the above steps of the present invention.

First, edge members 10 each of which has a substantially quadrangular pillar shape with a side X are disposed on side faces 110a of honeycomb fired bodies 110, each side face having a side A that is shared with an end face 110b of the honeycomb fired body 110 and each side X having substantially the same width as the side A, such that the side X of the edge member 10 is brought close to the side A.

Specifically, four honeycomb fired bodies 110 are aligned at a predetermined distance as shown in Fig. 4(a). Metal masks 55 are placed on side faces 110a of the three honeycomb fired bodies 110. Each mask 55 is larger than the side faces 110a, and has openings 55a at positions where the edge members 10 are to be formed. Edge member paste layers to be the edge members 10 are formed (disposed) in the openings 55a of the masks 55, and then dried for a predetermined time period to be solidified. Thereby, the edge members 10 are formed (the disposing of edge members).

As shown in Fig. 4(a), an edge member-applying apparatus 50 is prepared that is equipped with a tank 51 for storing an edge member paste, a cylinder 52 for squeezing out the edge member paste, supplying pipes 53, and applying jigs 54. Witch this apparatus, the edge member paste containing components such as inorganic particles A, inorganic fibers A, an inorganic binder, and an organic binder are applied and the edge member paste layers to be the edge members 10 are formed inside the openings 55a of the masks 55 as mentioned above. Thereafter, the edge member paste layers are heated for about 30 minutes to 2 hours at 105°C to 130°C to be solidified. Thereby, the edge members 10 are formed.
Each edge member 10 is preferably 3 to 15 mm in width along the side Y, and is preferably 5 to 10 mm in thickness along the side Z (see Fig. 3(b)).

As shown in Fig. 4(b), an adhesive paste-applying apparatus 60 is prepared that is equipped with a tank 61 for storing an adhesive paste, a cylinder 62 for squeezing out the adhesive paste, supplying pipes 63, and applying jigs 64. With this apparatus, the adhesive paste is applied to form adhesive paste layers 101a on the whole face where no edge member 10 is disposed of the side faces 110a of the honeycomb fired bodies 110.
As shown in Fig. 4(c), the three honeycomb fired bodies 110 each with the edge members 10 and the adhesive paste layer formed thereon are rotated about the longitudinal axis by 90°. Thereby, the face with the edge members 10 disposed and the adhesive paste layer 101a formed thereon of each honeycomb fired body 110 is made to face the side face 110a with no adhesive paste layer and the like formed thereon of the adjacent honeycomb fired body 110.

As shown in Fig. 4(d), the honeycomb fired bodies 110 are brought close to each other and are bonded to each other by interposing the adhesive paste layers and the edge members 10. In this step, the adhesive paste 101a leaks toward the upper side face 110a of the honeycomb fired body 110. Thus, the sticking adhesive paste may be scraped out with a scraper (not shown).

As shown in Fig. 5(e), a large-area mask 56 having openings 56a at portions where edge members are to be formed is placed on the side faces 110a with no edge member 10 disposed thereon of the four honeycomb fired bodies 110 such that the mask covers the whole surface of the side faces 210a of the honeycomb fired body 110. Then, the edge member paste is applied inside the openings 56a to form edge member paste layers, and the edge member paste layers are heated and dried to be solidified. Thereafter, as shown in Fig. 5(f), an adhesive paste 101a is applied in the same manner as shown in Fig. 4(b). Thereby, a product with the edge members and the adhesive paste layer formed on the upper face of the bonded four honeycomb fired bodies 110 is produced. In this case, the edge member paste layers are preferably formed such that portions to be edge members 10 are continuously disposed on the whole edge portion of the four-line honeycomb fired bodies as shown in Figs. 5(e) and 5(f). This is because, owing to such a structure, the edge members 10 are formed on the whole edge portion of the honeycomb fired bodies 110, and thus the adhesive paste is less likely to leak out from the edge portion of the honeycomb fired bodies 110.
In this case, the edge member paste layers to be edge members 10 may be formed only on the side face 110a of each honeycomb fired body 110, and then may be solidified to be the edge members 10.

Next, other four honeycomb fired bodies 110 are processed in the same manner as in the method shown in Figs. 4(a) to 4(d), and thereby a jointed product is manufactured in which the four honeycomb fired bodies 110 are bonded to each other at the side faces 110a. As shown in Fig. 5(g), the jointed product of the four honeycomb fired bodies 110 bonded to each other by interposing the adhesive paste layers 101a and the edge members 10 is placed on and bonded to the previously manufactured jointed product of the four honeycomb fired bodies 110 by interposing the edge members 10 and the adhesive paste layers. Thereby, a honeycomb aggregate is manufactured in which the two jointed products each including the four honeycomb fired bodies 110 are piled up. Fig. 5(g) shows the case that the edge members are formed not only on the side faces 110a of the honeycomb fired bodies 110 but also on the adhesive layers and/or the edge members between the honeycomb fired bodies 110.
The edge member may not be formed on the adhesive layers and/or the edge members between the honeycomb fired bodies. Even in such a case, the portion where no edge member is formed has a small cross-sectional area. Thus, the adhesive paste is less likely to leak from the opening portion and sealing failure that the adhesive paste sticks to the end faces of the honeycomb fired bodies 110 is less likely to occur; however, the edge members are preferably formed (disposed) even on the adhesive layers and/or the edge members.

As shown in Fig. 5(h), the aforementioned steps are repeated and four jointed products each including the four honeycomb fired bodies 110 bonded to each other by interposing the adhesive paste are piled up by interposing the edge members and the adhesive paste to provide a honeycomb aggregate 100a.
In the aforementioned steps of bonding the honeycomb fired bodies 110 to each other and of piling up one jointed product of the four honeycomb fired bodies 110 bonded to each other on another jointed product of the four honeycomb fired bodies 110, the vicinity of each end face of the honeycomb fired bodies 110 is blocked by the edge member 10. Thus, the adhesive paste is not pushed out across the edge member 10 toward the end face side of the honeycomb fired body 110, and problems such as sealing failure is less likely to occur at the end faces due to the adhesive paste sticking to the end faces of the honeycomb fired bodies 110.
In addition, the edge members of the provided honeycomb structured body each include an inorganic binder, inorganic fibers A, and inorganic particles A. Thus, the edge members do not disappear even when exposed to high temperature in processes such as the regenerating process, and defects such as crackings due to disappearance of the edge members are less likely to occur inside the adhesive layers and the edge members.

This honeycomb aggregate is heated for 1 hour at 50°C to 150°C so that the adhesive paste layers are dried and solidified to form adhesive layers. Thereby, the honeycomb aggregate is formed into a ceramic block in which the honeycomb fired bodies 110 bonded to each other.

Thereafter, the periphery of the ceramic block is cut with a diamond cutter or the like. Thereby, a substantially round pillar-shaped ceramic block is provided.
A seal material paste is applied to the peripheral surface of the substantially round pillar-shaped ceramic block, and the seal material paste is dried and solidified to form a coating layer.
Here, the seal material paste may be the same as the aforementioned adhesive paste.
As a result of the aforementioned steps, a honeycomb structured body is manufactured.

The following will describe the effects of the honeycomb structured body and the method for manufacturing a honeycomb structured body of the present embodiment.
(1) The edge member of the honeycomb structured body according to the present embodiment includes an inorganic material. Thus, the edge member does not disappear and no space is formed in the edge member and the adhesive layer when the adhesive layer is dried and solidified or upon the regenerating process in the case that the honeycomb structured body is used as an exhaust gas purifying filter. As a result, the honeycomb structured body of the present embodiment does not suffer defects such as crackings inside the edge members and/or the adhesive layers even when thermal stress is generated in the edge member or the adhesive layer due to expansion and shrinkage of the honeycomb fired body, the edge member, and/or the adhesive layer even when they are exposed to high temperature in processes such as the regenerating process.

(2) In the honeycomb structured body according to the present embodiment, the side face that contacts the adhesive layer has the side A shared with the end face of the honeycomb fired body; the edge member has a substantially quadrangular pillar shape with the side X having substantially the same width as the side A; and the edge member is disposed such that the side X is brought close to the end face of the honeycomb fired body. Thus, the honeycomb structured body does not suffer sealing failure at the end face portion of the honeycomb fired body due to sticking of the adhesive paste to the end face of the honeycomb fired body across the edge member formed on the honeycomb fired body, in other words, portions (cells) that should not be sealed of the honeycomb fired body are not sealed and the adhesive paste does not stick to the cells that should not be sealed of the honeycomb fired body. As a result, the honeycomb structured body of the present embodiment sufficiently serves as a filter for capturing PM in exhaust gas to purify the exhaust gas.

### (Second embodiment)

The following will describe a second embodiment that is one embodiment of the honeycomb structured body and the method for manufacturing a honeycomb structured body according to the present invention.
The present embodiment shows the case of the honeycomb structured body wherein the honeycomb fired body that constitutes the honeycomb structured body is made of porous silicon carbide, and the edge member 10 is a spacer (gap-maintaining member) prepared by applying a substance that is usable as an adhesive paste to the main surface of a substantially quadrangular pillar-shaped nonflammable sheet material. This spacer is attached to the vicinity of the end face on the side face 110a of the honeycomb fired body 110A by interposing the adhesive paste, and thereby used as an edge member 10.

A nonflammable sheet material for an edge member 10 is preferably produced from an inorganic fibrous paper or an inorganic filler paper. In particular, it is preferably produced from inorganic fibers B and inorganic particles B.
The inorganic fibrous paper is one mainly containing inorganic fibers B and processed into a sheet shape such as a paper, mat, or felt shape. The inorganic filler paper is one mainly containing inorganic particles B and/or fine inorganic fibers B and processed into a sheet shape.

The inorganic fibers B preferably include at least one selected from alumina, zirconia, alumina-silica, silica, glass, calcium silicate, magnesium silicate, rock wool, glass wool, mineral fibers, and synthetic fibers.

The inorganic particles B preferably include at least one selected from silica, titania, alumina, zirconia, spinel, magnesia, aluminum hydroxide, calcium carbonate, talc, calcium silicate, magnesium silicate, perlite, vermiculite, and diatomite.

Inorganic particles C such as MgO, CaO, and feldspar, organic substances such as woody pulp and organic binders, and inorganic fillers other than the aforementioned inorganic particles B may be added to the inorganic fibers B, the inorganic particles B, or combination of the inorganic fibers B and the inorganic particles B.

The nonflammable sheet material for an edge member 10 preferably has a density of 0.8 to 2.0 g/cm³. A nonflammable sheet material with a density of 0.8 to 2.0 g/cm³ may cause a small pressure applied to the side face of the honeycomb fired body at a portion contacting the edge member 10, and thereby the honeycomb fired body is prevented from being damaged.

The nonflammable sheet material for an edge member 10 of this kind is cut into pieces each with a predetermined edge member shape. The adhesive paste described in the first embodiment of the present invention is applied to the main surfaces of these cut sheet materials, and the sheet materials are attached to the vicinity of each end face on the side face 110a of the honeycomb fired body 110A. Thereby, the sheet materials are used as edge members 10.

Also in the present embodiment, the edge member having a side X with substantially the same width as the side of the side face of the honeycomb fired body is disposed. Thus, the adhesive paste does not leak to the end face side of the honeycomb fired body across the edge member and does not stick to the end face of the honeycomb fired body when the adhesive paste is applied to the side face of the honeycomb fired body in the below-mentioned manufacturing of the honeycomb structured body. As a result, the honeycomb structured body does not suffer sealing failure at the end face portion of the honeycomb fired body due to the sticking of the adhesive paste to the end face of the honeycomb fired body, in other words, portions (cells) that should not be sealed of the honeycomb fired body are not sealed and the adhesive paste does not stick to the cells that should not be sealed of the honeycomb fired body. Therefore, the honeycomb structured body of the present embodiment sufficiently serves as a filter for capturing PM in exhaust gas to purify the exhaust gas.

Further, the edge member includes a nonflammable inorganic material. Thus, the edge member does not disappear even when exposed to high temperature upon processes such as the regenerating process of the honeycomb structured body, and no defect such as space occurs in the edge member and/or the adhesive layer inside the honeycomb structured body.
As a result, the honeycomb structured body prevents defects such as crackings starting from the space inside the edge member or the adhesive layer due to expansion and shrinkage of the honeycomb fired body, the edge member, and/or the adhesive layer when they are exposed to high temperature in processes such as the regenerating process.

The following will describe a method for manufacturing the honeycomb structured body of the present embodiment based on the aforementioned description.
In the present embodiment, a honeycomb molded body and a honeycomb fired body are manufactured in the same methods as in the first embodiment of the present invention.

Thereafter, the edge member having a substantially quadrangular pillar shape with a side X is disposed on the side face of the honeycomb fired body having a side A shared with the end face, the side X having substantially the same width as the side A, such that the side X of the edge member is brought close to the side A; an adhesive paste is applied to the side face where the edge member is disposed; the side face of another honeycomb fired body is bonded onto the adhesive paste layer formed on the side face of the aforementioned honeycomb fired body, and these steps are repeated so that a honeycomb aggregate is manufactured in which the honeycomb fired bodies are bonded to each other by interposing the adhesive paste layer; and the adhesive paste layers are solidified to form adhesive layers.

In the present embodiment, the application of an adhesive paste, the manufacturing of a honeycomb aggregate, and the formation of adhesive layers are performed in the same manner as in the first embodiment of the present invention. Thus, the following will first describe the disposing of an edge member that is performed in a different manner from the first embodiment of the present invention.

In the present embodiment, the nonflammable sheet material for an edge member 10 having the shape of the edge member 10 is attached to the vicinity of the end face on the side face 110a of the honeycomb fired body 110A by interposing the adhesive paste instead of forming the edge member paste layer with a metal mask as shown in Fig. 4(a) performed in the first embodiment of the present invention.
Here, the bottom of the edge member 10 and the side face 110a of the honeycomb fired body 110 are bonded to each other, and the adhesive strength therebetween is stronger than the force the adhesive paste requires to leak from the edge portion of the honeycomb fired body when the honeycomb fired bodies are jointed to form the honeycomb aggregate. Thus, the adhesive paste does not leak toward the end face of the honeycomb fired body, and thereby the edge member is less likely to be displaced.
At this time, the edge member 10 is less likely to be displaced if the sheet material for an edge member 10 is pressed to be sufficiently bonded to the honeycomb fired body. Further, the sheet material for an edge member 10 may be surely fixed to the side face 110a of the honeycomb fired body 110 by drying and solidifying the adhesive paste after the bonding. The fixed edge member is less likely to be displaced.

Then, the adhesive paste 101a is applied to the whole surface of the portion where no edge member 10 is disposed on the side faces 110a of the honeycomb fired bodies 110, and thereby the adhesive paste layers 101a are formed in the same manner as in the first embodiment of the present invention (as in the same manner shown in Fig. 4(b)).

Then, the three honeycomb fired bodies 110 with the edge members 10 and the adhesive paste layers formed thereon are rotated about the longitudinal axis by 90°, and the face with the edge members 10 and the adhesive paste layer 101a formed thereon of each honeycomb fired body 110 is made to face the side face 110a with no adhesive paste layer and the like formed thereon of the adjacent honeycomb fired body 110 in the same manner as in the first embodiment of the present invention (as in the same manner shown in Fig. 4(c)).

The honeycomb fired bodies 110 are brought close to each other and are bonded to each other by interposing the adhesive paste layers and the edge members 10 in the same manner as in the first embodiment of the present invention (in the same manner shown in Fig. 4(d)).

Then, the sheet materials for edge members 10 are attached to the side faces 110a of the honeycomb fired bodies 110A by interposing the adhesive paste layers instead of the method of disposing the edge members 10 shown in Fig. 5(e) of the first embodiment of the present invention. At this time, the sheet materials for edge members 10 are attached to the jointed product of the four honeycomb fired bodies by interposing the adhesive paste layers so that the whole edge portion is continuously covered with the portion to be the edge member 10. As mentioned above, the sheet materials for edge members 10 may be attached only to the side faces 110a of the honeycomb fired bodies 110 by interposing the adhesive paste layers instead of continuously attaching the edge members 10 to the whole edge portion of the honeycomb fired bodies.

Then, other four honeycomb fired bodies 110 are processed in the same manner as mentioned above, and thereby the four honeycomb fired bodies 110 are bonded to each other at the side faces 110a. Thereafter, four jointed product of the four honeycomb fired bodies 110 are piled up, and thereby a honeycomb aggregate 100a is manufactured in the same manner as in the first embodimentof the present invention (in the same manner shown in Figs. 5(g) to (h)).
The adhesive paste layers are solidified to provide adhesive layers, the periphery of the honeycomb aggregate 100a is cut, and a coating layer is formed in the same manner as in the first embodiment of the present invention. Thereby, a honeycomb structured body is manufactured.

The following will describe the effects of the honeycomb structured body and the method for manufacturing a honeycomb structured body of the present embodiment.
(1) The edge member of the honeycomb structured body according to the present embodiment includes a nonflammable material containing an inorganic material. Thus, the edge member does not disappear and no space is formed in the adhesive layer upon drying and solidifying the adhesive paste layer or upon the regenerating process in the case that the honeycomb structured body is used as an exhaust gas purifying apparatus. As a result, the honeycomb structured body is less likely to suffer defects such as crackings starting from the space inside the edge member or the adhesive layer due to expansion and shrinkage of the honeycomb fired body, the edge member, and/or the adhesive layer when they are exposed to high temperature in processes such as the regenerating process.
(2) In the honeycomb structured body of the present embodiment, the side face contacting the adhesive layer has a side A that is shared with the end face of the honeycomb fired body; the edge member has a substantially quadrangular pillar shape with a side X having substantially the same width as the side A; and the edge member is disposed such that the side X is brought close to the end face of the honeycomb fired body. Thus, the adhesive paste does not leak across the edge member and stick to the end face of the honeycomb fired body, and the honeycomb structured body does not suffer sealing failure at the end face portion of the honeycomb fired body, in other words, portions (cells) that should not be sealed of the honeycomb fired body are not sealed, and the adhesive paste does not stick to the cells of the honeycomb fired body. As a result, the honeycomb structured body sufficiently serves as a filter for capturing PM in exhaust gas to purify the exhaust gas.

### (Third embodiment)

The following will describe a third embodiment that is one embodiment of the honeycomb structured body and the method for manufacturing a honeycomb structured body according to the present invention.
The present embodiment gives an explanation of the case in which the honeycomb fired body that constitutes the honeycomb structured body is made of a porous silicon carbide, and the edge member 10 is integrally formed with the honeycomb fired body by preparing a wet mixture that is produced from the same material as the honeycomb fired body 110, forming in the vicinity of the end face on the side face 110a of the honeycomb molded body 110 in the shape of the edge member, and firing them.

The wet mixture for an edge member 10 may be substantially the same as the constituent material of the honeycomb fired body. The wet mixture is not limited to the same as the constituent material of the honeycomb fired body as long as the edge member can be integrally formed with the honeycomb fired body.

The edge member of the present embodiment is integrally formed with the honeycomb fired body. Thus, the honeycomb structured body according to the present embodiment is also described as follows:
a honeycomb structured body includes:
   honeycomb fired bodies each having a large number of cells longitudinally disposed in parallel with each other with a cell wall interposed therebetween, and each having side faces and end faces;
   adhesive layers disposed on the side faces and each adhesive layer bonding the honeycomb fired bodies to each other; and
   protruding portions integrally formed with the honeycomb fired bodies on edge portions of the side faces,
   each side face that contacts the adhesive layer having a side A shared with an end face,
   each protruding portion having a substantially quadrangular pillar shape with a side X having substantially the same width as the side A, and disposed such that the side X is brought close to the end face of the honeycomb fired body.
      In the above honeycomb structured body, the protruding portion corresponds to the edge member mentioned below.

Examples of the main component of the wet mixture for an edge member include silicon carbide; the main component of the constituent material of the honeycomb structured body is not limited to silicon carbide and may be other ceramic materials. Examples of the other ceramic materials include nitride ceramics such as aluminum nitride, silicon nitride, boron nitride, and titanium nitride; carbide ceramics such as zirconium carbide, titanium carbide, tantalum carbide, and tungsten carbide; composites of metal and nitride ceramics; composites of metal and carbide ceramics; and the like.

In addition, examples of the constituent material also include ceramic materials such as silicon-containing ceramics prepared by mixing metal silicon with the aforementioned ceramics and ceramics bound with silicon and silicate compounds.
The wet mixture including the constituent material of the honeycomb structured body and the wet mixture for an edge member preferably contain substantially the same main component. In such a case, the edge member is less likely to suffer crackings due to expansion and shrinkage of the honeycomb fired body, edge member, and/or the adhesive layer when they are exposed to high temperature in processes such as the regenerating process.

The main component of the wet mixture for an edge member is particularly preferably silicon carbide or silicon-containing silicon carbide because of their excellent properties such as heat resistance, mechanical strength, and thermal conductivity.

The organic binder that is a component of the wet mixture for an edge member is not particularly limited. Examples thereof include carboxymethyl cellulose, hydroxyethyl cellulose, polyethylene glycol, and the like. The amount of the organic binder is preferably 1 to 10 parts by weight for 100 parts by weight of the ceramic powders.

The plasticizer and the lubricant used for preparing the wet mixture for an edge member are not particularly limited. Examples of the plasticizer include glycerin and the like. Examples of the lubricant include polyoxy alkylene compounds such as polyoxyethylene alkyl ethers and polyoxypropylene alkyl ethers, and the like.
Specific examples of the lubricant include polyoxyethylene monobutyl ether and polyoxypropylene monobutyl ether.
The wet mixture for an edge member may contain no plasticizer and/or lubricant in some cases.

In addition, a dispersant solution may be used for preparing the wet mixture for an edge member. Examples of the dispersant solution include organic solvents such as water and benzene, alcohols such as methanol, and the like.
Further, the wet mixture for an edge member may contain a forming aid and the like.
The forming aid is not particularly limited, and examples thereof include ethylene glycol, dextrin, fatty acids, fatty acid soaps, polyalcohols, and the like.

If necessary, the wet mixture for an edge member may contain a pore-forming agent such as balloons that are fine hollow spheres containing oxide ceramics, spherical acrylic particles, and graphite.
The balloons are not particularly limited. Examples thereof include alumina balloons, glass micro balloons, shirasu balloons, fly ash balloons (FA balloons), mullite balloons, and the like. Preferable among these are alumina balloons.
Since the wet mixture for a honeycomb fired body is substantially the same as the wet mixture for an edge member, the description thereof is omitted herein. The phrase "substantially the same as" herein means that these wet mixtures contain the same main component. As long as they contain the same main component, the wet mixtures may contain the main component at different ratios and may contain different components other than the main component.

Also in the present embodiment, the edge member having a side X with substantially the same width as the side of the side face of the honeycomb fired body is disposed. Thus, the adhesive paste does not leak to the end face side of the honeycomb fired body across the edge member and stick to the end face of the honeycomb fired body when the adhesive paste is applied to the side face of the honeycomb fired body upon production of the honeycomb structured body mentioned below. As a result, the honeycomb structured body does not suffer sealing failure at the end face portion of the honeycomb fired body due to sticking of the adhesive paste to the end face of the honeycomb fired body, in other words, portions (cells) that should not be sealed of the honeycomb fired body are not sealed and the adhesive paste does not stick to the cells of the honeycomb fired body. Therefore, the honeycomb structured body sufficiently serves as a filter for capturing PM in exhaust gas to purify the exhaust gas.

In addition, the edge member includes substantially the same material as the wet mixture for a honeycomb fired body. Thus, the edge member does not disappear even when exposed to high temperature upon processes such as the regenerating process of the honeycomb structured body. As a result, problems such as crackings are less likely to occur inside the edge member or the adhesive layer even when thermal stress occurs in the edge member or the adhesive layer due to expansion and shrinkage of the honeycomb fired body, the edge member, and/or the adhesive layer when they are exposed to high temperature in processes such as the regenerating process.

In the method for manufacturing a honeycomb structured body according to the present embodiment, the wet mixture having the aforementioned composition is applied to the vicinity of the end face on the side face of the honeycomb molded body with a mask or the like which is similar to that used in the first embodiment of the present invention, and thereby a wet mixture layer having an edge member shape shown in Fig. 3 is formed. Thereafter, the honeycomb molded body with the wet mixture layer formed thereon is dried, degreased, and fired. Thereby, the honeycomb fired body 110 and the edge member 10 are simultaneously manufactured.

The following will describe a method for manufacturing a honeycomb structured body of the present embodiment based on the aforementioned description.
The method for manufacturing a honeycomb structured body according to the present embodiment provides a honeycomb structured body including: honeycomb fired bodies each having a large number of cells longitudinally disposed in parallel with each other with a cell wall interposed therebetween and each having side faces and end faces;
adhesive layers disposed on the side faces and each bonding the honeycomb fired bodies to each other; and
edge members each including an inorganic material, the method including:
disposing edge members each having a substantially quadrangular pillar shape with a side X on the side faces of the honeycomb molded body having a side A that is shared with an end face of the honeycomb molded body, the side X having substantially the same width as the side A, such that the side X of each edge member is brought close to the side A;
firing the honeycomb molded bodies with the edge members disposed thereon to manufacture honeycomb fired bodies with the edge members disposed thereon;
forming adhesive paste layers on the portion where no edge member disposed of the honeycomb fired bodies;
manufacturing a honeycomb aggregate with the honeycomb fired bodies bonded to each other by interposing the adhesive paste layers; and
solidifying the adhesive paste layers to form adhesive layers.
The edge member is disposed on the side face of the honeycomb fired body by the aforementioned firing; here, it is also possible to consider that the aforementioned protruding portion is formed on the side face of the honeycomb fired body.

First, a cell-sealed honeycomb molded body is manufactured in the same manner as in the first embodiment of the present invention.
In the first embodiment of the present invention, the edge member is disposed on the side face of the honeycomb fired body; in the present embodiment, the edge member is disposed on the side face of the honeycomb molded body. The edge member may be disposed in the same manner as in the first embodiment of the present invention.

The edge members having a substantially quadrangular pillar shape with a side X are disposed on the side faces each having a side A that is shared with an end face, the side X having substantially the same width as the side A, such that the side X of each edge member is brought close to the side A.
In the present embodiment, a wet mixture having substantially the same composition as the wet mixture for a honeycomb fired body is applied to the vicinity of the end face on the side face of the honeycomb molded body with a mask and the like in the same manner as in the first embodiment of the present invention (in the same manner as shown in Fig. 4(a)). Thereby, a wet mixture layer for an edge member having the shape of an edge member shown in Fig. 3 is formed.

The wet mixture layers for edge members each having the shape of an edge member are formed on the side faces of the honeycomb molded bodies by the above method. In other words, all edge members required for manufacturing a honeycomb aggregate are disposed on the side faces of the honeycomb molded bodies at first.

Next, the honeycomb molded bodies each with the wet mixture layers for edge members formed each on the vicinity of the end face on the side face are heated to be degreased so that organic substances therein are removed. Then, the degreased honeycomb molded bodies are transferred to a firing furnace and fired. Thereby, honeycomb fired bodies are manufactured.

As a result of the above steps, honeycomb fired bodies are manufactured in each of which the edge members each produced from substantially the same material as the honeycomb fired body are formed on the side faces.
Thereafter, adhesive paste layers are formed on the portions where no edge member is formed of the honeycomb fired bodies. The adhesive paste layers may be formed in the same manner as in the first embodiment of the present invention (in substantially the same manner as shown in Fig. 4(b)).

In substantially the same manner as in the first embodiment of the present invention (in the same manner as shown in Figs. 4(c) and 4(d)), four honeycomb fired bodies 110 are bonded to each other by interposing the edge members and the adhesive paste layers. Further, in the same manner as in the first embodiment of the present invention (in the same manner as shown in Figs. 5(e) to 5(h)), honeycomb fired bodies with the edge members including the same material as the honeycomb fired body formed thereon are prepared, and four jointed products of the four honeycomb fired bodies 110 are piled up by interposing the edge members and the adhesive paste layers. Thereby, a honeycomb aggregate 100a is manufactured.

Then, the adhesive paste layers are solidified by heating and drying to form adhesive layers. Thereafter, the periphery of the honeycomb aggregate 100a is cut and a coating layer is formed in the same manner as in the first embodiment of the present invention. Thereby, the manufacture of the honeycomb structured body is finished.

Alternatively, a predetermined sheet-shaped dried body or fired body may be preliminarily prepared from the wet mixture for a honeycomb fired body, and the sheet-shaped dried body or fired body may be disposed on the side faces of the honeycomb molded bodies, if necessary, by interposing the wet mixture for a honeycomb fired body, and thereafter the honeycomb molded bodies may be fired.

In the above method, the honeycomb fired bodies and the edge members are simultaneously manufactured. Alternatively, the edge members each of which is a predetermined sheet-shaped fired product may be preliminarily prepared from the wet mixture for a honeycomb fired body, and then these sheet-shaped fired products may be bonded to the vicinity of each end face on the side faces of the honeycomb fired bodies by interposing an adhesive paste. Even in this case, the adhesive paste is prevented from leaking toward the end face of the honeycomb fired body, and the sheet-shaped fired product does not disappear when exposed to high temperature in processes such as the regenerating process. Thus, the honeycomb structured body prevents defects such as crackings starting from the space inside the edge member or the adhesive layer due to expansion and shrinkage of the honeycomb fired body, edge member, and/or the adhesive layer when they are exposed to high temperature in processes such as the regenerating process.

The following will describe the effects of the honeycomb structured body and the method for manufacturing a honeycomb structured body of the present embodiment.
(1) The edge member of the honeycomb structured body according to the present embodiment is formed from substantially the same material as the honeycomb fired body. Thus, the edge member does not disappear even when exposed to high temperature upon processes such as the regenerating process in the case that the honeycomb structured body is used as an exhaust gas purifying apparatus, and no space is formed in the adhesive layer.
   As a result, the honeycomb structured body is less likely to suffer defects such as crackings starting from the space inside the edge member or the adhesive layer due to expansion and shrinkage of the honeycomb fired body, the edge member, and/or the adhesive layer when they are exposed to high temperature in processes such as the regenerating process.
(2) In the honeycomb structured body according to the present embodiment, the side face that contacts the adhesive layer has a side A that is shared with the end face; the edge member has a substantially quadrangular pillar shape with a side X having substantially the same width as the side A; and the edge member is disposed such that the side X is brought close to the end face of the honeycomb fired body. Thus, the honeycomb structured body does not suffer sealing failure of the honeycomb fired body due to sticking of the adhesive paste to the end face of the honeycomb fired body across the edge member, in other words, portions (cells) that should not be sealed of the honeycomb fired body are not sealed and the adhesive paste does not stick to the cells of the honeycomb fired body.
   As a result, the honeycomb structured body sufficiently serves as a filter for capturing PM in exhaust gas to purify the exhaust gas.

### (Fourth embodiment)

The following will describe a fourth embodiment that is one embodiment of the honeycomb structured body and the method for manufacturing a honeycomb structured body according to the present invention.
In the present embodiment, the honeycomb fired body that constitutes the honeycomb structured body is made of porous silicon carbide, and the edge member 10 is formed from a paste more viscous than the adhesive paste and thus does not flow even when formed on the vicinity of the end face on the side face of the honeycomb molded body.

The edge member paste used in the present embodiment preferably includes inorganic particles B and inorganic fibers B. This is because as follows. The paste of this kind has heat resistance, of course; in the case of containing a large amount of inorganic fibers B, the edge member layer that is formed by solidifying the edge member paste has elasticity. As a result, the honeycomb structured body is less likely to suffer problems such as crackings due to expansion and shrinkage of the honeycomb fired body, the edge member, and/or the adhesive layer when they are exposed to high temperature in processes such as the regenerating process, and the whole honeycomb structured body has excellent mechanical properties.
The edge member paste preferably has substantially the same composition as the adhesive paste, and preferably has a higher viscosity than the adhesive paste. Hereinafter, the edge member paste (the paste that forms an edge member) is referred to simply as the edge member.

The inorganic fibers B in the edge member preferably include, for example, at least one selected from alumina, zirconia, alumina-silica, silica, glass, calcium silicate, magnesium silicate, mineral fibers, rock wool, glass wool, and synthetic fibers.

The inorganic particles B in the edge member preferably include, for example, at least one selected from silica, titania, alumina, zirconia, spinel, magnesia, aluminum hydroxide, calcium carbonate, talc, calcium silicate, magnesium silicate, perlite, permiculite, and diatomite.

The edge member may contain solids content of the inorganic binder. The edge member of this kind gives excellent adhesiveness between the honeycomb fired bodies in the honeycomb structured body. Examples of the inorganic binder include silica sol, alumina sol, and the like. Each of these may be used alone or two or more of these may be used in combination. Preferable among these inorganic binders is silica sol.

The edge member may further contain inorganic particles D and a scaly inorganic material or a layered inorganic material in addition to the inorganic particles B, the inorganic fibers B, and the inorganic binder.
The inorganic particles D are inorganic particles of a compound other than the inorganic particles A, inorganic particles B, and inorganic particles C, and examples thereof include ceramic balloons. Each of these may be used alone or two or more of these may be used in combination.
Examples of the ceramic balloons include alumina balloons, silica balloons, and the like. Balloons of these kinds improve coatability (easy fillingness) of the edge member.

The scaly inorganic material or the layered inorganic material in the edge member is a compound not used as the inorganic fibers A, the inorganic fibers B, the inorganic particles A, the inorganic particles B, the inorganic particles C, and the inorganic particles D. Examples thereof include graphite; smectite clay minerals such as montmorillonite and saponite; layered phosphates such as kaolinite clay minerals and layered zirconium phosphate; layered transition metal oxysalts; layered double hydroxides such as hydrotalcite; layered silicates such as magadiite and kanemite; mica minerals such as white mica, black mica, bronze mica, aluminoceladonite, roscoelite, paragonite, and eastonite; metal phosphates; and the like. These compounds are generally used as particles, and may be used as fibers. Each of these layered inorganic materials may be used alone, or two or more of these may be used in combination.

The edge member may contain an organic substance such as an organic binder. Examples of the organic binder include polyvinyl alcohol, methyl cellulose, ethyl cellulose, carboxymethyl cellulose, and the like. Each of these may be used alone or two or more of these may be used in combination.

The edge member preferably contains: 10 to 70% by weight of the inorganic fibers B; 3 to 80% by weight of the inorganic particles B; 1 to 30% by weight (solids content concentration) of the inorganic binder; and 5 to 20% by weight of a solvent such as water. In the case that the edge member contains the inorganic particles D, the amount thereof is preferably 0 to 40 parts by weight for 100 parts by weight of the inorganic fibers B, the inorganic particles B, and the inorganic binder. In the case that the edge member contains the scaly inorganic material or the layered inorganic material, the amount thereof is preferably 0 to 40 parts by weight.

The edge member is preferably a highly viscous paste, and preferably has a viscosity of 60 to 100 Pa·s, more preferably 70 to 100 Pa·s, and still more preferably 80 to 100 Pa·s. An edge member paste having a viscosity of less than 60 Pa·s may insufficiently prevent flowing of the adhesive paste. An edge member paste having a viscosity of more than 100 Pa·s may have too high viscosity and may be difficult to be prepared as a paste; even if the paste is prepared, the paste has a difficulty in forming an edge member.

The adhesive paste preferably has a viscosity of 30 to 60 Pa·s, and more preferably 40 to 50 Pa·s. An adhesive paste having a viscosity in the above range shows good adhesiveness as an adhesive paste, and it is less likely to leak toward the end face of the honeycomb fired body across the edge member. The viscosities of the adhesive paste and the edge member paste are the values measured with a spiral viscometer type A (PL-1TL, Malcom Co., Ltd.) at 10 rpm by immersing the sensor of the viscometer into the pastes contained in containers.

The edge member of the present embodiment is in a paste state, and is solidified after the honeycomb fired bodies are bonded to each other to form a honeycomb aggregate. Thus, the edge member plays a role of preventing leakage of the adhesive paste to the end face of the honeycomb fired body rather than plays a role of a spacer (gap-maintaining member). In the present embodiment, the edge member and a spacer (gap-maintaining member) are preferably used in combination.

Thus, a spacer is disposed on a position with no edge member disposed thereon on the side face of the honeycomb fired body to separate the honeycomb fired bodies at a predetermined distance before or after the edge member or the adhesive paste layer is disposed.

The edge member 10 may be prepared from substantially the same composition as the material of the adhesive layer; the edge member is required to prevent the fluid adhesive paste from leaking toward the end face of the honeycomb fired body. Thus, the composition of the edge member is preferably changed to be suitable for the above function, and the edge member is preferably adjusted to have high viscosity (for example, 60 to 100 Pa·s).

Also in the present embodiment, the edge member having a side X with substantially the same width as a side of the side face of the honeycomb fired body is disposed. Thus, the adhesive paste does not leak toward the end face side across the edge member and stick to the end face of the honeycomb fired body when the adhesive paste is applied to the side face of the honeycomb fired body in the production of the honeycomb structured body mentioned below. As a result, sealing failure does not occur at the end face portion of the honeycomb fired body due to this sticking of the adhesive paste to the end face of the honeycomb fired body, in other words, portions (cells) that should not be sealed of the honeycomb fired body are not sealed and the adhesive paste does not stick to the cells of the honeycomb fired body. Therefore, the honeycomb structured body sufficiently serves as a filter for capturing PM in exhaust gas to purify the exhaust gas.

Since the edge member contains an inorganic material, the edge member does not disappear even when exposed to high temperature upon processes such as the regenerating process of the honeycomb structured body. Thus, the honeycomb structured body prevents problems such as crackings inside the edge member or the adhesive layer due to expansion and shrinkage of the honeycomb fired body, the edge member, and/or the adhesive layer when they are exposed to high temperature in processes such as the regenerating process.

The following will describe a method for manufacturing the honeycomb structured body of the present embodiment based on the above description.
First, honeycomb fired bodies are manufactured in the same manner as in the first embodiment of the present invention.
Then, the edge members each having a substantially quadrangular pillar shape with a side X are disposed on one side face having a side A that is shared with the end face, the side X having substantially the same width as the side A, such that the side X is brought close to the side A; the adhesive paste is applied to the side face with the edge members disposed thereon; one side face of another honeycomb fired body is bonded to the adhesive paste applied on the side face of the above honeycomb fired body; the above steps are repeated so that the honeycomb fired bodies are bonded to each other by interposing the adhesive paste layers to form a honeycomb aggregate; and the adhesive paste layers are solidified to form adhesive layers.

The disposing of the edge member, the application of the adhesive paste, the manufacturing of the honeycomb aggregate, and the formation of the adhesive layers are performed in the same manner as in the first embodiment of the present invention except that the edge member paste is a highly viscous paste that contains the inorganic particles B, the inorganic fibers B, the inorganic binder, and the like, that has a viscosity of 60 to 100 Pa·s, that is applied in the shape shown in Figs. 3(a) and 3(b), and that is formed into the edge member 10 without being dried and solidified. Since the formed edge member is a paste more viscous than the adhesive paste, it also serves as an adhesive, and thus the honeycomb fired bodies are well bonded to each other.
On the side face of the honeycomb fired body is also disposed a spacer (gap-maintaining member) for adjusting the distance between the honeycomb fired bodies in addition to the paste as an edge member.

Next, the periphery of the honeycomb aggregate is cut and a coating layer is formed in the same manner as in the first embodiment of the present invention. Thereby, a honeycomb structured body is manufactured.

The following will describe the effects of the honeycomb structured body and the method for manufacturing a honeycomb structured body according to the present embodiment.
(1) The edge member of the honeycomb structured body according to the present embodiment contains the inorganic material. Thus, the edge member does not disappear and no space is formed in the adhesive layer even when exposed to high temperature upon drying and solidifying the adhesive paste layer or in processes such as the regenerating process in the case that the honeycomb structured body is used as an exhaust gas purifying apparatus. As a result, the honeycomb structured body is less likely to suffer defects such as crackings starting from the space inside the edge member and/or the adhesive layer due to thermal stress generated by expansion and shrinkage of the honeycomb fired body, the edge member, and/or the adhesive layer when they are exposed to high temperature in processes such as the regenerating process.
(2) In the honeycomb structured body according to the present embodiment, the side face that contacts the adhesive layer has a side A shared with the end face; the edge member has a substantially quadrangular pillar shape with a side X having substantially the same width as the side A; and the edge member is disposed such that the side X is brought close to the end face. Thus, sealing failure does not occur at the end face portion of the honeycomb fired body due to sticking of the adhesive paste across the edge member to the end face of the honeycomb fired body, in other words, portions (cells) that should not be sealed of the honeycomb fired body are not sealed and the adhesive paste does not stick to the cells of the honeycomb fired body. As a result, the honeycomb structured body sufficiently serves as a filter for capturing PM in exhaust gas to purify the exhaust gas.

The following will describe examples that disclose the first to fourth embodiments of the present invention in more detail. Here, the present invention is not limited to these examples.

### (Example 1)

### (Manufacturing of honeycomb fired body)

Silicon carbide coarse powder having an average particle diameter of 22 µm (52.8% by weight) and silicon carbide fine powder having an average particle diameter of 0.5 µm (22.6% by weight) were mixed to provide a mixture. The obtained mixture was mixed and kneaded with acryl resin (2.1% by weight), an organic binder (methyl cellulose, 4.6% by weight), a lubricant (UNILUB, NOF Corp., 2.8% by weight), glycerin (1.3% by weight), and water (13.8% by weight) to provide a wet mixture. Then, the wet mixture was extrusion-molded to provide a raw honeycomb molded body having substantially the same shape as shown in Fig. 2(a) and cells not sealed.

The raw honeycomb molded body was dried with a microwave drying apparatus to provide a dried honeycomb molded body. A paste (wet mixture) having the same composition as the raw molded body was filled into predetermined cells, and again dried with a drying apparatus.

The dried honeycomb molded body was degreased at 400°C, and then fired for 3 hours at 2200°C under normal pressure argon atmosphere. Thereby, a honeycomb fired body made of a silicon carbide sintered body was manufactured with a porosity of 45%, an average particle diameter of 15 µm, a size of 34.3 mm × 34.3 mm × 150 mm, the number of cells (cell density) of 300 pcs/inch², and a cell wall thickness of 0.25 mm (10 mil).

### (Preparation of adhesive paste)

Alumina fibers having an average fiber length of 20 µm (30% by weight), silicon carbide particles having an average particle diameter of 0.6 µm (21% by weight), silica sol (15% by weight, solids content concentration: 30% by weight), carboxymethyl cellulose (5.6% by weight), and water (28.4% by weight) were mixed and kneaded to provide an adhesive paste.

### (Preparation of edge member paste)

An edge member paste used here was one having the same composition as the aforementioned adhesive paste.

### (Bonding of the honeycomb fired bodies)

A honeycomb aggregate was prepared in the same steps and methods as shown in Figs. 4(a) to 4(d) and Figs. 5(e) to 5(h).
As shown in Fig. 4(a), masks 55 and an edge member-applying apparatus 50 equipped with applying jigs 53 were prepared, and the edge member paste was applied and filled into openings 55a of the masks 55. Thereby, paste layers for edge members 10 each having a substantially quadrangular pillar shape and a side X were formed on the side faces 110a of the three honeycomb fired bodies 110 each having a side A that is shared with the end face of each honeycomb fired body 110, the side X having substantially the same width as the side A, such that the side X of each edge member 10 was brought close to the side A. Then, the paste layers for the edge members 10 were heated for 1 hour at 110°C to be dried and solidified.

Each of the edge members 10 formed by the above step was 34.3 mm in length along the side X, 8 mm in width along the side Y, and 1.0 mm in thickness along the side Z (see Fig. 3(b)).

As shown in Fig. 4(b), the adhesive paste 101a was applied to the portions with no edge member 10 formed thereon on the side faces 110a of the honeycomb fired bodies 110.
As shown in Fig. 4(c), the honeycomb fired bodies 110 were rotated about the longitudinal axis by 90°. As shown in Fig. 4(d), the honeycomb fired bodies were bonded to each other by interposing the adhesive paste and the edge member. The adhesive paste leaking to the upper face of the honeycomb fired body was scraped out.

As shown in Fig. 5(e), a mask 56 is placed on the honeycomb fired bodies, and the edge member paste was applied to and filled into the portions with no edge member 10 disposed thereon on the side faces 110a of the honeycomb fired bodies through openings 56a of the mask. The paste was heated for 1 hour at 110°C to be dried and solidified. Thereby, edge members 10 were formed. As shown in Fig. 5(f), the adhesive paste was applied between the edge members 10, and thereby an adhesive paste layer 101a was formed. As a result, a jointed product of four honeycomb fired bodies 110 bonded to each other at the side faces 110a was prepared.

As shown in Fig. 5(g), another jointed product of four honeycomb fired bodies 110 bonded to each other at the side faces 110a was disposed on and bonded to the jointed product of the four honeycomb fired bodies 110 placed below.
The same steps were repeated as mentioned in Embodiment 1, and the four jointed products each including the four honeycomb fired bodies 110 bonded to each other by interposing the adhesive paste layers were piled up. Thereby, a honeycomb aggregate 100a was manufactured.
This honeycomb aggregate 100a was heated at 150°C so that the adhesive paste layers were solidified to be adhesive layers. Thereby, a ceramic block was manufactured (see Fig. 5(h)).
At that time, each adhesive paste layer had a thickness (the distance between the honeycomb fired bodies) of 1.0 mm that is the same as the thickness of each edge member 10.
Here, the adhesive paste had a viscosity of 49 Pa·s.

### (Cutting of periphery and formation of coating layer)

The periphery of the ceramic block was cut into a round pillar shape with a diamond cutter.
A seal material paste made of the same material as the adhesive paste was applied to the periphery of the cut ceramic block to form a seal material paste layer with a thickness of 0.2 mm. This seal material paste layer was dried at 120°C. Thereby, a round pillar-shaped honeycomb structured body was manufactured with a coating layer formed on the periphery and a size of 132.5 mm in diameter × 150 mm in length.

### (Example 2)

Honeycomb fired bodies were manufactured and an adhesive paste was prepared in the same manner as in Example 1.

### (Preparation of sheet material for edge member)

Glass fibers as a main component, woody pulp, feldspar, and aluminum hydroxide were put into water and stirred to form slurry. The slurry was subjected to a sheet-forming process, and then was dehydrated to be sheets.
These sheets were dried to be 1.0-mm thick sheets.
The sheets were punched with a die. Thereby, sheets for edge members were manufactured each with a length of 34.3 mm, a width of 8 mm, and a thickness of 1.0 mm.

### (Bonding of the honeycomb fired bodies)

The adhesive paste prepared in the same manner as in Example 1 was applied to one main surface of each of the sheets for edge members. Then, the sheets were attached to the side faces 110a at the vicinity of the end faces of the honeycomb fired bodies 110 as shown in Fig. 3(a). Thereby, edge members 10 were formed.
An adhesive paste layer was formed at a portion with no edge member 10 formed thereon in the same manner as in Example 1. Then, the adhesive paste was also applied to the upper faces of the edge members 10. Thereafter, four honeycomb fired bodies were bonded to each other by interposing the adhesive paste and the edge members as shown in Fig. 4(d).

The edge members 10 were attached to the side faces 110a of other honeycomb fired bodies 110 by the above method. Then, the adhesive paste was applied to the edge members 10 to form adhesive paste layers. The honeycomb fired bodies 110 with the adhesive paste layers and the edge members formed thereon were bonded to each other to form three jointed products each including four honeycomb fired bodies bonded to each other by interposing the edge members 10 and the adhesive paste layers. As shown in Fig. 5(g), these products were bonded to each other by interposing the edge members 10 and the adhesive paste layers in the same manner as in Example 1. Thereby, a ceramic block was manufactured. Here, the adhesive paste had a viscosity of 49 Pa·s.

### (Cutting of periphery and formation of coating layer)

The periphery of the ceramic block was cut and a coating layer was formed in the same manner as in Example 1. Thereby, a round pillar-shaped honeycomb structured body was manufactured with a size of 132.5 mm in diameter × 150 mm in length.

### (Example 3)

Cell-sealed honeycomb molded bodies were manufactured in the same manner as in Example 1.
The wet mixture for manufacturing honeycomb molded bodies was manufactured, and this wet mixture was applied to the side faces of the honeycomb molded bodies in the vicinity of the end faces by using the same mask 55 as in Example 1. Then, the wet mixture was dried and solidified to be a solidified product of wet mixture layers each having a shape of the edge member 10 as shown in Figs. 3(a) and 3(b). This step was repeated several times, and thereby solidified products of the wet mixture layers were formed on the side faces of the honeycomb molded bodies. In each honeycomb molded body, the number of the side faces on which the solidified products of the wet mixture layers were formed depends on the position of the honeycomb fired body in the honeycomb aggregate 100a (see Fig. 5(h)). In the case that the honeycomb fired body is positioned at an internal portion of the honeycomb aggregate 100a, the solidified products of the wet mixture layers are required to be formed on all of the four side faces of the honeycomb molded body. In the case that the honeycomb fired body is positioned at an outer portion, the solidified products of the wet mixture layers are required to be formed on three or two side faces of the honeycomb molded body.

Thereafter, degreasing and firing were performed in the same manner as in Example 1, and the edge members produced from the same material as the honeycomb fired body were formed on the side faces in the vicinity of the end faces. Thereby, a honeycomb fired body made of a silicon carbide sintered body was manufactured with a porosity of 44%, an average pore diameter of 16 µm, a size of 34.3 mm × 34.3 mm × 150 mm, the number of cells (cell density) of 300 pcs/inch², and a cell wall thickness of 0.25 mm (10 mil). The edge members 10 each were 34.3 mm in length along the side X, 8 mm in width along the side Y, and 1.0 mm in thickness along the side Z.

An adhesive paste was prepared and the adhesive paste layers were formed in the same manner as in Example 1, and a honeycomb aggregate 100a was manufactured in the same manner as in Example 1. The honeycomb aggregate 100a was heated so that the adhesive paste layers were solidified to form adhesive layers. Thereby, a ceramic block was manufactured.
Thereafter, the periphery of the ceramic block was cut and a coating layer was formed in the same manner as in Example 1. Thereby, a round pillar-shaped honeycomb structured body was manufactured with a size of 132.5 mm in diameter × 150 mm in length. Here, the adhesive paste had a viscosity of 49 Pa·s.

### (Example 4)

In the same manner as in Example 1, honeycomb fired bodies were manufactured and an adhesive paste was prepared.

### (Preparation of edge member paste)

Alumina fibers having an average fiber length of 20 µm (35% by weight), silicon carbide particles having an average particle diameter of 0.6 µm (21% by weight), silica sol (15% by weight, solids content concentration: 30% by weight), carboxymethyl cellulose (5.6% by weight), and water (18.5% by weight) were mixed and kneaded to provide a edge member paste. This edge member paste had a viscosity of 81 Pa·s.

The edge member paste prepared as mentioned above was applied to the side faces of the honeycomb fired bodies in the vicinity of the end faces to form paste layers (edge members). Here, the paste was neither heated nor solidified. Then, in the same manner as in Example 1, an adhesive paste was prepared and applied, a honeycomb aggregate was manufactured, adhesive layers were formed, and a honeycomb block was manufactured. Thereafter, the periphery of the ceramic block was cut and a coating layer was formed in the same manner as in Example 1. Thereby, a round pillar-shaped honeycomb structured body was manufactured with a size of 132.5 mm in diameter × 150 mm in length. Here, the adhesive paste has a viscosity of 49 Pa·s.

### (Comparative Example 1)

First, honeycomb fired bodies were manufactured and an adhesive paste was prepared in the same manner as in Example 1.

### (Preparation of edge member paste)

Alumina fibers having an average fiber length of 20 µm (25% by weight), silicon carbide particles having an average particle diameter of 0.6 µm (21% by weight), silica sol (15% by weight, solids concentration: 30% by weight), carboxymethyl cellulose (5.6% by weight), and water (50% by weight) were mixed and kneaded to provide an edge member paste. This edge member paste had a viscosity of 56 Pa·s.

The edge member paste prepared as mentioned above was applied to the side faces of the honeycomb fired bodies in the vicinity of the end faces to form paste layers (edge members). Here, the paste layers were neither heated nor solidified. Then, the prepared adhesive paste was applied, a honeycomb aggregate was manufactured, adhesive layers were formed, and a ceramic block was manufactured in the same manner as in Example 1. Thereafter, the periphery of the ceramic block was cut and a coating layer was formed in the same manner as in Example 1. Thereby, a round pillar-shaped honeycomb structured body was manufactured with a size of 132.5 mm in diameter × 150 mm in length. The adhesive paste had a viscosity of 49 Pa·s.

### (Comparative Example 2)

First, honeycomb fired bodies were manufactured and an adhesive paste was prepared in the same manner as in Example 1.

### (Preparation of edge member sheet)

In the same manner as in Example 2, spacers were manufactured each with a length of 8.0 mm, a width of 5.0 mm, and a thickness of 1.0 mm.

### (Bonding of the honeycomb fired bodies)

No edge member was formed on the side faces of the honeycomb fired bodies, and the adhesive paste was applied to the whole surface of the side faces of the honeycomb fired bodies to form adhesive paste layers.
Then, the spacer (gap-maintaining member) prepared above was attached to the vicinity of each of the four corners of the side faces with the adhesive paste layer formed thereon. Specifically, each spacer was attached such that the shortest distances between each side forming the corner of the side face of the honeycomb fired body and each near and parallel side of the spacer were 4.5 mm.

Except that the adhesive paste layer was formed on the whole surface of the side faces of the honeycomb fired bodies and the spacers were attached to the side faces in the above manner, the ceramic block was manufactured, the periphery of the ceramic block was cut, and a coating layer was formed in the same manner as in Example 1. Thereby, a round pillar-shaped honeycomb structured body was manufactured with a size of 132.5 mm in diameter × 150 mm in length. The adhesive paste had a viscosity of 49 Pa·s.

### (Evaluation of leakage of adhesive paste)

In each of the examples and the comparative examples, whether or not the adhesive paste leaked across the edge member was visually observed when the honeycomb aggregate was manufactured by applying the adhesive paste to the honeycomb fired bodies with the edge members formed thereon and bonding the honeycomb fired bodies having the adhesive paste layers and the edge members.

### (Evaluation of sealing failure on end face of honeycomb structured body)

In each of the examples and the comparative examples, whether or not the cells that should not be sealed were sealed in the honeycomb structured body (whether or not the honeycomb structured body had a cell without light leakage) was checked with a light leakage detector. The case that a cell that should not be sealed did not cause light leakage was regarded as sealing failure; while the case that a cell that should not be sealed caused light leakage was regarded as good sealing.

Light leakage observation was performed as follows: irradiating one end face of the honeycomb structured body with light from the light source of the light leakage detector; projecting the light leaked out through the cells on a display with a camera; and visually observing whether or not light leaked from a cell that should not be sealed.

The honeycomb structured bodies manufactured in Examples 1 to 4 did not suffer sealing failure and leakage of the adhesive paste.

In contrast, in Comparative Example 1 where the edge member paste had a low viscosity, the adhesive paste leaked out and sealing failure occurred. In Comparative Example 2 where the spacers were disposed on only the four corners of the honeycomb fired body in a manner similar to the conventional spacers (gap-maintaining members), the adhesive paste leaked out because the honeycomb structured body had no function of preventing leakage, and sealing failure occurred.

### (Fifth embodiment)

The following will describe a fifth embodiment that is one embodiment of the honeycomb structured body and the method for manufacturing a honeycomb structured body of the present invention referring to the drawings.

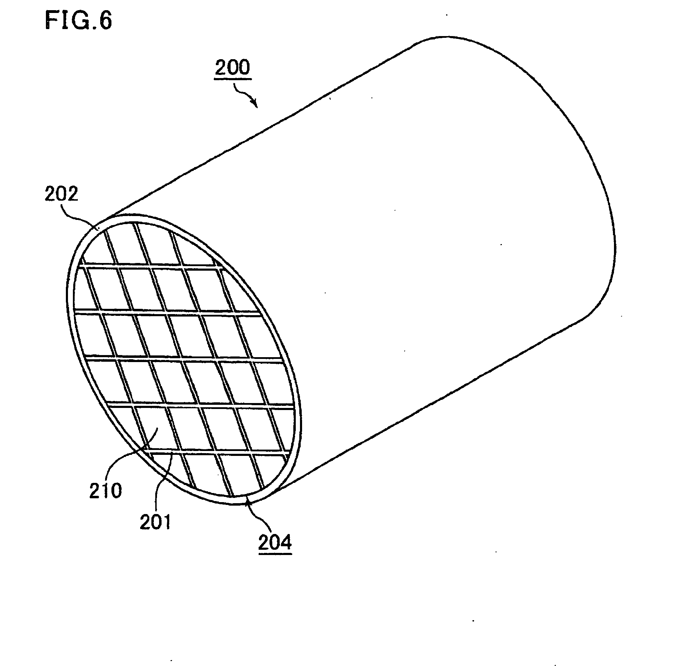

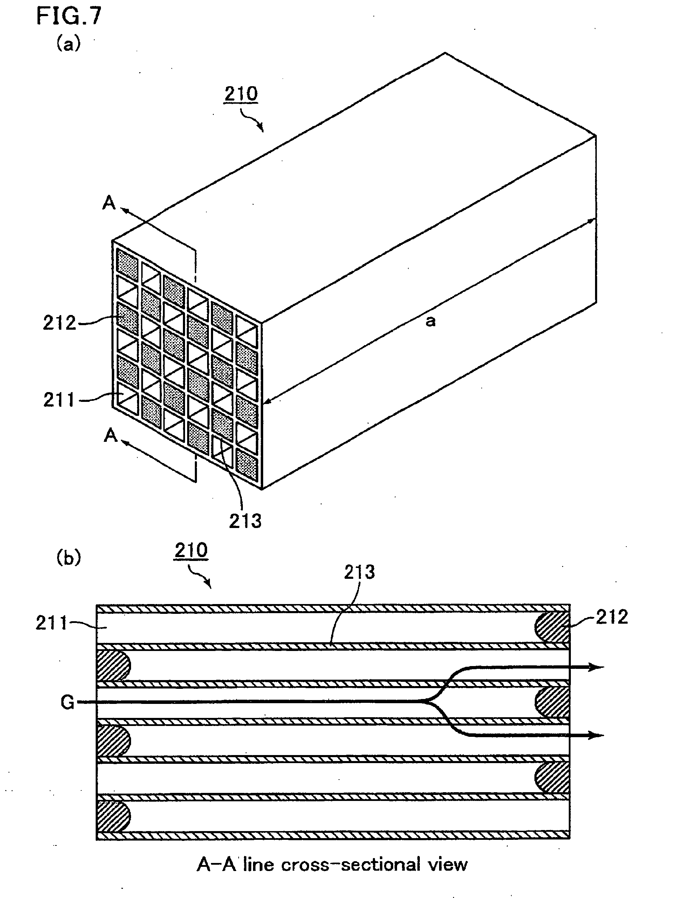

Fig. 6 is a schematic perspective view showing one example of the honeycomb structured body according to the fifth embodiment of the present invention. Fig. 7(a) is a schematic perspective view showing one example of the honeycomb fired body that constitutes the honeycomb structured body according to the fifth embodiment of the present invention, and Fig. 7(b) is an A-A line cross-sectional view showing the honeycomb fired body shown in Fig. 7(a).

The honeycomb structured body 200 shown in Fig. 6 includes 36 pieces of honeycomb fired bodies 210 each having the shape shown in Figs. 7(a) and 7(b) and bonded to each other by interposing adhesive layers 201 to form a ceramic block 204, and a coating layer 202 was formed on the periphery of the ceramic block 204. Here, the ceramic block 204 is cut to have the shape shown in Fig. 6 after the honeycomb fired bodies 210 are bonded to each other.

Each honeycomb fired body 210 that constitutes the honeycomb structured body 200 has a large number of cells 211 disposed in parallel in the longitudinal direction (the direction indicated by a in Fig. 7(a)) with cell walls 213 interposed therebetween similarly to the honeycomb fired body 110 shown in Figs. 2(a) and 2(b), and either end of each cell 211 is sealed with a plug 212. Thus, exhaust gas G flowing into one cell 211 having an opening on one end face always passes through a cell wall 213 that separates the cell 211 from the adjacent cell, and then flows out from another cell 211 having an opening on the other end face.
As a result, the cell wall 213 serves as a filter for capturing PM and the like matter.

In the honeycomb structured body 200 shown in Fig. 6, edge members and adhesive layers are disposed between the honeycomb fired bodies, and a coating layer is disposed on the periphery of the honeycomb structured body similarly to the first embodiment of the present invention. The material, shape, position, and the like of the edge member may be the same as those mentioned in the first to fourth embodiments of the present invention; thus, the description about the edge member is omitted here.

The honeycomb structured body according to the fifth embodiment of the present invention is manufactured by a method different from in the first embodiment of the present invention; thus, the following will describe the method of the present embodiment.

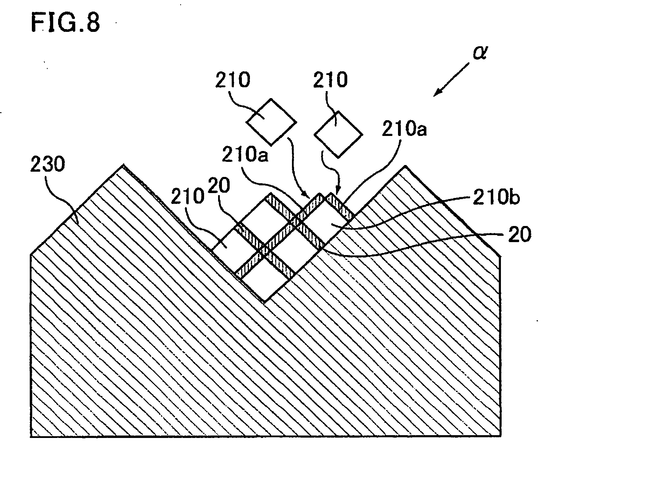

Fig. 8 is a schematic cross-sectional view showing the state of forming edge members and adhesive paste layers with a stage having a V-shaped profile.
As shown in Fig. 8, a stage 230 with the upper portion having a V-shaped profile for diagonally stacking the honeycomb fired bodies 210 is prepared, and the honeycomb fired bodies 210 are diagonally stacked thereon. The side face 210a of the honeycomb fired body 210 has a rectangular shape with a side A that is shared with the end face 210b and a side B that is perpendicular to the side A (see Figs. 3(a) and 3(b)), and two side faces 210a are placed upward.
In the present embodiment, two edge members 20 are formed on each of these two upward side faces 210a with the edge member-applying apparatus 50 shown in Figs. 4 and 5.

Each of the two edge members 20 formed has a substantially quadrangular pillar shape similarly to the edge member 10 shown in Fig. 3, and has a side X with the same length as the side A of the side face 210a, a side Y along the width direction, and a side Z along the thickness direction. The XY face contacts the side face 210a, and each side X is brought close to the end face 210b of the honeycomb fired body 210.

Next, the adhesive paste is applied to the portions with no edge member 20 formed thereon of the side faces 210a with an adhesive paste-applying apparatus 60 and thereby adhesive paste layers are formed.

Then, other honeycomb fired bodies 210 are stacked on the adhesive paste layers and the edge members 20 formed on the side faces of the honeycomb fired body 210. The step of forming the adhesive paste layers and the edge members 20 on the side faces 210a and this step are repeated, and thereby a honeycomb aggregate is manufactured that includes 36 pieces of the honeycomb fired bodies 210 with the adhesive paste layers and the edge members 20 disposed therebetween.

The honeycomb aggregate is heated for one hour at 50°C to 150°C and thus the adhesive paste layers are solidified to be adhesive layers. The periphery of the honeycomb aggregate is cut with a diamond cutter and a substantially round pillar-shaped ceramic block is manufactured. A seal material paste is applied to the periphery of the substantially round pillar-shaped ceramic block, and then the seal material paste is dried and solidified to be a coating layer. Thereby, the manufacturing of the honeycomb structured body is finished.

The present embodiment shows the same effects as the first embodiment of the present invention.

### (Sixth embodiment)

The following will describe the sixth embodiment that is one embodiment of the present invention.

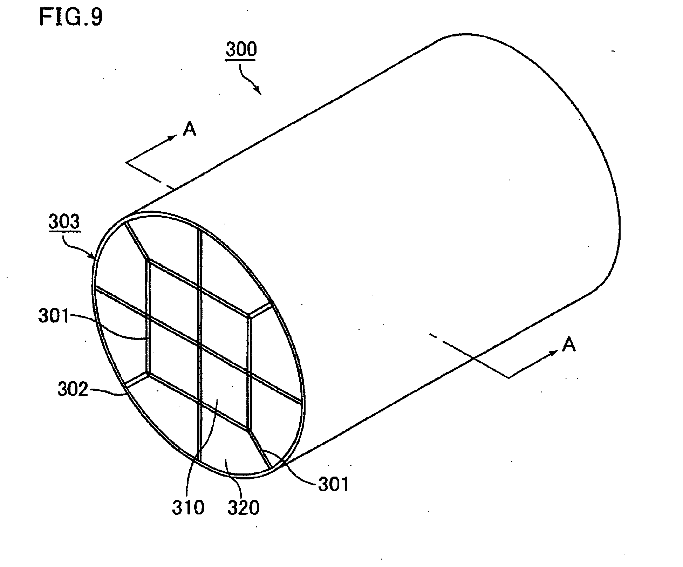

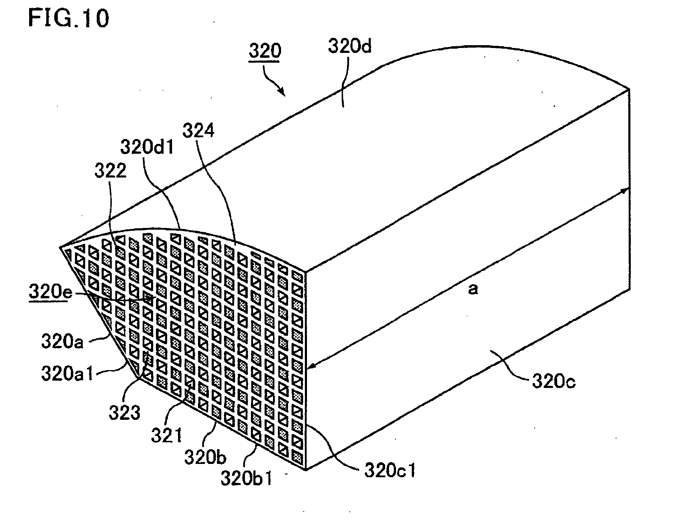

Fig. 9 is a schematic perspective view showing one example of the honeycomb structured body according to the present embodiment. Fig. 10 is a schematic perspective view showing one example of the honeycomb fired body disposed on the periphery of the honeycomb structured body according to the present embodiment.

The honeycomb structured body 300 shown in Fig. 9 is made of porous silicon carbide. Honeycomb fired bodies 310 each having the same structure as the honeycomb fired body 110 shown in Figs. 2(a) and 2(b) are disposed on the center portion, and honeycomb fired bodies 320 each having a substantially fan shape in the direction perpendicular to the longitudinal direction as shown in Fig. 10 are disposed on the peripheral portion.
These honeycomb fired bodies 310 and honeycomb fired bodies 320 are bonded to each other by interposing the adhesive layers 301 to form a ceramic block 303, and a coating layer 302 is formed on the periphery of the ceramic block 303.

Each honeycomb fired body 320 shown in Fig. 10 includes a large number of cells 321 disposed in parallel in the longitudinal direction (the direction indicated by a in Fig. 7(a)) with cell walls 323 interposed therebetween, and either end of each cell 321 is sealed with a plug material 322. Thus, exhaust gas G flowing into one cell 321 having an opening on one end face always passes through a cell wall 323 that separates the cell 321 from the adjacent cell, and then flows out from another cell 321 having an opening on the other end face. As a result, the cell wall 323 serves as a filter for capturing PM and the like matter.
Each honeycomb fired body 310 also has the same function.

The difference between the honeycomb structured body 300 and the honeycomb structured body 100 according to the first embodiment of the present invention shown in Fig. 1 is that the honeycomb fired bodies 320 disposed on the peripheral portion are not formed by cutting, but formed by using the honeycomb fired bodies each having an outside wall 324 on the periphery thereof and cells 321 therein as shown in Fig. 10. The peripheral portion of the honeycomb structured body is formed from multiple honeycomb fired bodes 320 (specifically, 8 pieces of honeycomb fired bodies) each having the same shape.

As shown in Fig. 10, the end face 320e of the honeycomb fired body 320 is a substantially fan-shaped unit surrounded by three sides 320a1, 320b1, and 320c1, each shared with an end face and a side face of the honeycomb fired body 320, and one arc 320d1. Two angles each formed by two of these three sides (the angle formed by the side 320b1 and the side 320c1, and the angle formed by the side 320a1 and the 320b1 are 90° and 135°, respectively. Thus, the round pillar-shaped honeycomb structured body 300 is formed by bonding eight honeycomb fired bodies 320 around the four substantially quadrangular pillar-shaped honeycomb fired bodies 310 by interposing the edge members 30 and the adhesive layers 301.

The edge member 30 is the same as the edge member 10 described in the first embodiment of the present invention except its size. With respect to the honeycomb fired bodies 310, the edge members 30 are disposed on the side faces of the honeycomb fired body 320 shown in Fig. 10 such that the side X of each edge member 30 is brought close to the side A of the honeycomb fired body 310 shared with the end face of the honeycomb fired body 320 in the same manner as in the honeycomb fired body 110 shown in Figs. 2(a) and 2(b).
With respect to the honeycomb fired body 320, six edge members 30 each having a different size are disposed on the honeycomb fired body 320 such that the bottom face of each edge member 30 contacts the side faces 320a, 320b, and 320c of the honeycomb fired body 320, and that the side X of each edge member 30 is brought close to the side 320a1, the side 320b1, or the side 320c1. The side X of each edge member 30 has the same length as the side 320a1, the side 320b1, or the side 320c1 of the honeycomb fired body 320.

Thus, the adhesive paste does not leak out across the edge member 20 to stick to the end face of the honeycomb fired body when applied to the side face of the honeycomb fired body in the below-mentioned production of the honeycomb structured body. Thereby, sealing failure does not occur at the end face portion of the honeycomb fired body due to sticking of the adhesive paste to the end face of the honeycomb fired body, in other words, portions (cells) that should not be sealed of the honeycomb fired body are not sealed and the adhesive paste does not stick to the cells of the honeycomb fired body. As a result, the honeycomb structured body 300 sufficiently serves as a filter for capturing PM in exhaust gas to purify the exhaust gas.

The material, shape, position (arrangement), and the like of the edge member may be the same as in the first to fourth embodiments of the present invention; thus, the description thereof are omitted. Usage instruction for the edge member is described in the below-mentioned production method.

The following will describe a method for manufacturing the honeycomb structured body according to the present embodiment.
In the same manner as in the first embodiment of the present invention, a wet mixture for manufacturing a honeycomb molded body is manufactured; the wet mixture is charged into an extrusion-molding apparatus and extrusion-molded; both ends of the honeycomb molded body are cut into a predetermined length with a cutting apparatus; and the cut honeycomb molded body is dried with a drying apparatus. Then, a predetermined amount of a seal material paste to be a plug prepared from the wet mixture is charged into gas flow-out ends of cells that are to have an opening on the gas-inlet end face and gas flow-in ends of cells that are to have an opening on the gas-outlet end face. Thereby, cells are sealed.
A cell-sealed honeycomb molded body is manufactured through these steps.

The cell-sealed honeycomb molded body is heated and degreased so that organic substances therein are removed, and then transferred to a firing furnace and fired. Thereby, a honeycomb fired body is manufactured.

Edge members each having a substantially quadrangular pillar shape with a side X are formed and disposed on the side faces each having a side A and the like shared with the end face of the honeycomb fired bodies 310 and 320, the side X having substantially the same width as the side A and the like, such that the side X of each edge member is brought close to the side A and the like;
the honeycomb fired bodies each with the edge members disposed thereon are bonded to each other by interposing the edge members, and thereby a honeycomb jointed body with the honeycomb fired bodies jointed to each other by interposing the edge members is manufactured;
a jointed body-housing container is prepared with a size such that a predetermined gap is formed between the honeycomb jointed body contained therein and the jointed body-housing container;
the honeycomb jointed body is put into the jointed body-housing container and the predetermined gap is formed between the honeycomb jointed body and the jointed body-housing container;
the adhesive paste is filled into the gaps between the honeycomb fired bodies of the honeycomb jointed body and the gap between the honeycomb jointed body and the jointed body-housing container to form adhesive paste layers and a coating layer in/on the honeycomb jointed body; and
the adhesive paste layers are solidified to be adhesive layers.

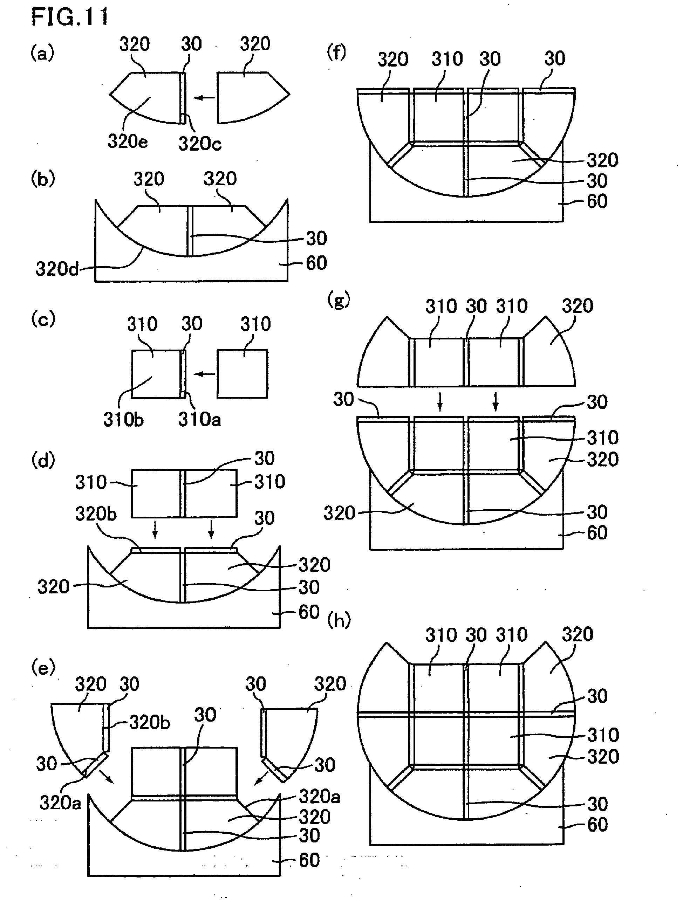

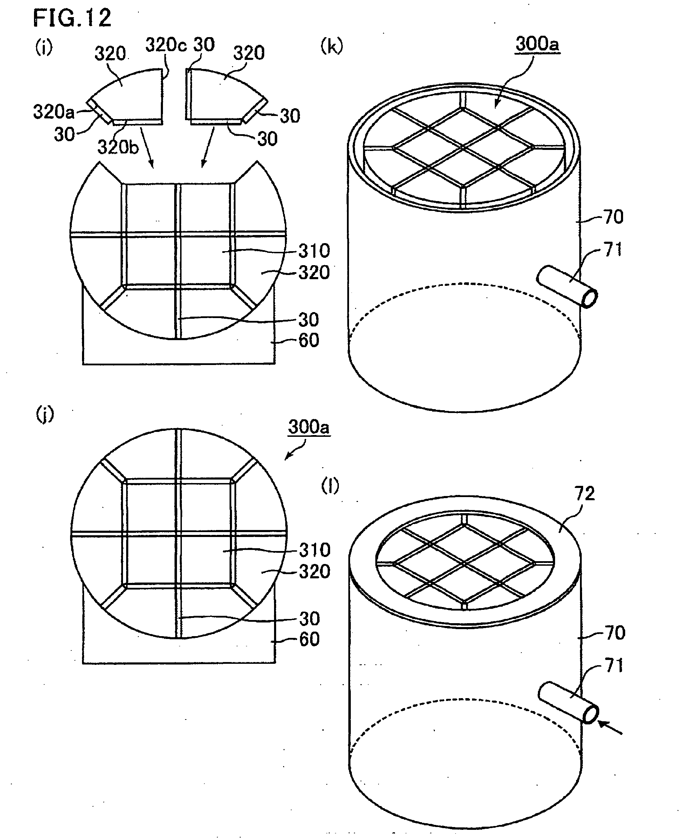

Figs. 11(a) to 11(h) and Figs. 12(i) to 12(l) are schematic explanatory views showing the above steps that are one example of the procedure of manufacturing the honeycomb structured body according to the sixth embodiment of the present invention.

First, two edge members 30 each having a substantially quadrangular pillar shape with a side X having substantially the same width as the side 320c1 are formed on the side face 320c of the honeycomb fired body 320, shown in Fig. 10 and disposed on the peripheral portion of the honeycomb structured body 300, so that one edge member is brought close to the side 320c1 of one end face 320e of the honeycomb fired body 320 and the other edge member to that of the other end face 320e, with the edge member-applying apparatus 50 used in the first embodiment of the present invention (disposing of edge members). In this case, the edge member preferably has excellent adhesiveness; for example, it is preferably the edge member mentioned in the second or fourth embodiment of the present invention. In the case of the edge members mentioned in the first and third embodiments of the present invention, application of the adhesive paste onto these edge members may enable use of these edge members for bonding (jointing) the honeycomb fired bodies. Even in the below-mentioned steps, application of the adhesive paste may enable bonding (jointing) of the honeycomb fired bodies by interposing the edge members.

As shown in Fig. 11(a), the honeycomb fired body 320 with the edge members 30 disposed thereon at two portions and the honeycomb fired body 320 with no edge member 30 disposed thereon are bonded (jointed) to each other by interposing the edge members 30 such that the side faces 320c face to each other and the side faces 320c are perfectly covered with each other. As a result, a bonded (jointed) product is manufactured in which the two honeycomb fired bodies 320 are bonded (jointed) to each other by interposing the edge members 30 while no adhesive paste is applied thereto as shown in Fig. 11(b) (manufacturing of a honeycomb jointed body).
Then, the bonded (jointed) two honeycomb fired bodies 320 are fixed on a fixing stage 60 such that the side faces 320d forming a curved face of the honeycomb fired bodies 320 is placed downward.

The two quadrangular pillar-shaped honeycomb fired bodies 310 are bonded (jointed) to each other by interposing the edge members 30 at the side faces 310a as shown in Fig. 11(c). Then, four edge members 30 are formed on the upper side faces 320b of the two fixed honeycomb fired bodies 320 as shown in Fig. 11(d). The two honeycomb fired bodies 310 bonded (jointed) to each other by interposing the edge members 30 are placed on the two honeycomb fired bodies 320 such that the side faces 310a and the side faces 320b are perfectly covered with each other, and they are bonded (jointed) to each other by interposing the edge members 30.

As shown in Fig. 11(e), the edge members 30 are formed on the side faces 320a and 320b of the two honeycomb fired bodies 320 in the same manner. Honeycomb fired bodies 320 are bonded (jointed) to the side faces 320a of the bonded (jointed) honeycomb fired bodies 320 and the side faces 310a of the bonded (jointed) honeycomb fired bodies 310 by interposing the edge members 30. Thereby, a honeycomb jointed body having a half round pillar shape is formed as shown in Fig. 11(f). Then, edge members 30 are formed on the upper face of this half round pillar-shaped honeycomb jointed body in the same manner as performed above.

As shown in Fig. 11(g), two honeycomb fired bodies 310 are bonded (jointed) to each other by interposing an edge member 30, and a honeycomb fired body 320 is bonded (jointed) to each side of the bonded (jointed) honeycomb fired bodies 310 by interposing an edge member 30. Then, this product is bonded (jointed) to the honeycomb jointed body by interposing the edge members 30 as shown in Fig. 11(f) (Fig. 11(h)).

As shown in Fig. 12(i), two honeycomb fired bodies 320 each with edge members 30 formed on the side face 320a and side face 320b are bonded (jointed) to the honeycomb jointed body shown in Fig. 11(h) by interposing the edge members 30. Thereby a round pillar-shaped honeycomb jointed body 300a is completed (Fig. 12(j)).

As shown in Fig. 12(k), this completed honeycomb jointed body 300a is placed in a jointed body-housing container 70 that is a part of an adhesive-charging apparatus. As shown in Fig. 12(l), a circular lid 72 is placed thereon so that the adhesive paste does not leak from the space formed between the honeycomb jointed body 300a and the jointed body-housing container 70.

The adhesive paste is charged into the jointed body-housing container 70 through a paste-charging pipe 71. Thereby, the adhesive paste is filled into the gaps between the bonded (jointed) honeycomb fired bodies 310 and 320 where no edge member 30 formed, and the adhesive paste is also filled between the periphery of the honeycomb jointed body 300a and the jointed body-housing container 70. As a result, a honeycomb aggregate is manufactured (filling of adhesive paste).
The manufactured honeycomb aggregate is taken out from the jointed body-housing container 70, and is heated for one hour at 50°C to 150°C so that the adhesive paste layers are solidified to be simultaneously adhesive layers and a coating layer. Thereby, a honeycomb structured body is manufactured.

In the present embodiment, the honeycomb jointed body is manufactured by the method shown in Figs. 11(a) to 11(h) and Figs. 12(i) to 12(j). The method of the present invention is not limited to the aforementioned method. For example, the honeycomb jointed body may be manufactured by preliminarily bonding (jointing) multiple honeycomb fired bodies to each other by interposing edge members, and further bonding (jointing) the bonded (jointed) honeycomb fired bodies by interposing edge members.

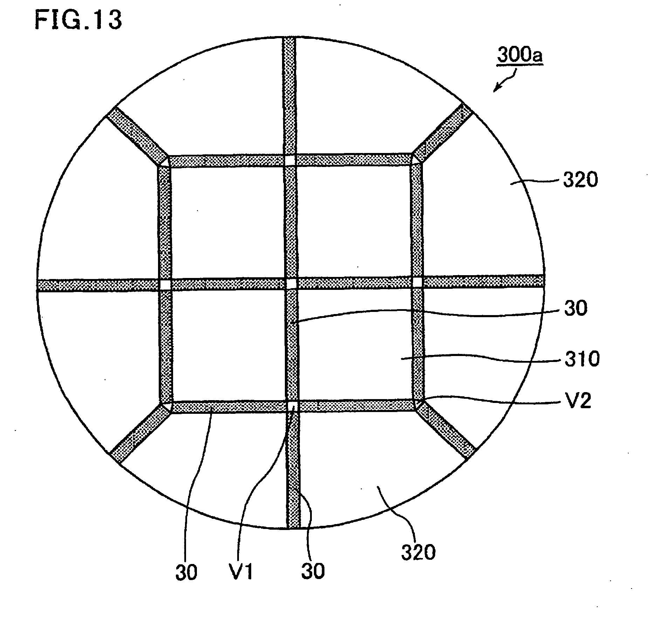

Fig. 13 is an enlarged side view showing the honeycomb jointed body 300a shown in Fig. 12(j). This honeycomb jointed body 300a is equipped with the edge members 30 each having the same width as one of the side faces of the honeycomb fired bodies 310 and 320 in the vicinity of the end faces. The portions where no edge member 30 formed are only the cross-shaped center portion V1 and the Y-shaped central portion V2 where the corner portions of the honeycomb fired bodies 310 and 320 are gathered. Such portions have extremely small areas; thus, an adhesive paste having a predetermined viscosity is less likely to leak out therefrom, and the aforementioned filling of the adhesive paste is performed without sealing the end face portions of the honeycomb fired bodies.

As is described in the first embodiment of the present invention, the adhesive paste is perfectly prevented from leaking out toward the end faces by forming the continuous edge member layer when the edge members are formed on the side faces of the honeycomb fired bodies in the examples in which multiple honeycomb fired bodies are bonded (jointed) to each other (see Figs. 5(f) and 5(g)).

The honeycomb structured body and the method for manufacturing a honeycomb structured body according to the sixth embodiment of the present invention show the same effects as the first embodiment of the present invention.

### (Seventh embodiment)

The honeycomb structured body according to the seventh embodiment of the present invention is the same as the honeycomb structured body according to the sixth embodiment of the present invention. In the method for manufacturing the honeycomb structured body, the adhesive paste is charged into the jointed body-housing container 70 through the paste-filling pipe 71 and thereby filled into the gaps between the bonded (jointed) honeycomb fired bodies 310 and 320 where no edge member 30 formed (filling of adhesive paste) in the same manner as in the sixth embodiment of the present invention except that the size of the jointed body-housing container 70 shown in Fig. 12(k) is changed to the same as the outer size of the honeycomb aggregate.
Then, the manufactured honeycomb aggregate is taken out from the jointed body-housing container 70, and heated for one hour at 50°C to 150°C so that the adhesive paste layers are solidified to be adhesive layers. In the case that a coating layer is not required to be formed on the periphery of the honeycomb structured body, the production of the honeycomb structured body is finished. In the case that a coating layer is to be formed on the periphery of the honeycomb structured body, a seal material paste is applied to the periphery and the seal material paste is dried and solidified to be a coating layer because no coating layer is formed on the periphery of the honeycomb aggregate with the adhesive layers formed therein. Thereby, the production of the honeycomb structured body is finished.

The honeycomb structured body and the method for manufacturing a honeycomb structured body according to the seventh embodiment of the present invention show the same effects as the sixth embodiment of the present invention.

### (Other embodiments)

The method for forming an edge member and the method for forming an adhesive paste layer are not particularly limited to those mentioned in the first to seventh embodiments of the present invention, and may be selected from various methods. In the sixth embodiment of the present invention, the coating layer is formed on the periphery of the honeycomb structured body 300; however, the coating layer may not be formed. In this case, a sheet and the like may be placed around the honeycomb jointed body so that the adhesive paste does not leak from the peripheral portion instead of the jointed body-housing container, and the adhesive paste may be filled thereinto.

The shape of the honeycomb structured body according to the embodiments of the present invention is not particularly limited to a round pillar shape shown in Fig. 1. It may be any pillar shape such as a substantially cylindroid shape, a substantially racetrack pillar shape, a substantially triangular pillar shape (e.g. a triangular pillar with its apexes of the triangle being rounded), and a substantially polygonal pillar shape.

In the honeycomb structured body according to the present invention, the cells of the honeycomb fired bodies that constitute the honeycomb structured body may include large-volume cells and small-volume cells. A honeycomb fired body including large-volume cells and small-volume cells is a product having cells each having a relatively large cross-sectional area perpendicular to the longitudinal direction and cells each having a relatively small cross-sectional area.
Here, the cross-sectional shapes of the large-volume cells and the small-volume cells are not particularly limited. The cross-sectional shape perpendicular to the longitudinal direction of each large-volume cell may be a substantially octagonal shape, and the cross-sectional shape perpendicular to the longitudinal direction of each small-volume cell may be a substantially quadrangular shape. The cross-sectional shape perpendicular to the longitudinal direction of the large-volume cell may be a substantially quadrangular shape, and the cross-sectional shape perpendicular to the longitudinal direction of the small-volume cell may also be a substantially quadrangular shape. Each side of the cells in the cross section may be a curved line.

In the honeycomb fired body that constitutes the honeycomb structured body according to the present invention, ends of the cells may not be sealed. The honeycomb structured body of this kind may be used as a catalyst-supporting carrier.

The main component of the constituent material of the honeycomb fired body constituting the honeycomb structured body of the present invention is not particularly limited to silicon carbide. It may be other ceramic materials, including: nitride ceramics such as aluminum nitride, silicon nitride, boron nitride, and titanium nitride; carbide ceramics such as zirconium carbide, titanium carbide, tantalum carbide, and tungsten carbide; composites of metals and nitride ceramics; composites of metals and carbide ceramics; and the like.
In addition, examples of the constituent material include ceramic materials such as silicon-containing ceramics formed by mixing metal silicon to the aforementioned ceramics and ceramics bound by silicon or silicate compounds.

The main component of the constituent material of the honeycomb fired body is particularly preferably silicon carbide or silicon-containing silicon carbide.
This is because the components of these kinds are excellent in properties such as heat resistance, mechanical strength, and thermal conductivity.

The material of the adhesive paste is not particularly limited. It preferably contains inorganic particles A, an organic binder, and at least one of inorganic fibers A, whiskers, a scaly inorganic material, and a layered inorganic substance.
Examples of the inorganic binder contained in the adhesive paste include silica sol, alumina sol, and the like. Each of these may be used alone or two or more of these may be used in combination. The inorganic binder is preferably silica sol.

Examples of the organic binder contained in the adhesive paste include polyvinyl alcohol, methyl cellulose, ethyl cellulose, carboxymethyl cellulose, and the like. Each of these may be used alone or two or more of these may be used in combination. The organic binder is preferably carboxymethyl cellulose.

Examples of the inorganic fibers A contained in the adhesive paste include silica-alumina, mullite, alumina, silica, and the like. Each of these may be used alone or two or more of these may be used in combination. The inorganic fibers A are preferably alumina fibers. The inorganic fibers A may be soluble fibers.

Examples of the inorganic particles A contained in the adhesive paste include carbides and nitrides. Specific examples thereof include inorganic powders of silicon carbide, silicon nitride, and boron nitride. Each of these may be used alone or two or more of these may be used in combination. The inorganic particles A are preferably silicon carbide excellent in thermal conductivity.

Further, the adhesive paste may contain a pore-forming agent, if necessary, such as balloons that are fine hollow spheres containing oxide ceramics, spherical acrylic particles, and graphite. The balloons are not particularly limited, and examples thereof include alumina balloons, glass micro balloons, shirasu balloons, fly ash balloons (FA balloons), mullite balloons, and the like. Preferable among these are alumina balloons.

The honeycomb structured body may carry a catalyst. The catalyst supported on the honeycomb structured body is preferably a noble metal such as platinum, palladium, or rhodium, for example. More preferable among these is platinum. Examples of other catalysts include alkaline metals such as potassium and sodium, and alkaline earth metals such as barium. Each of these catalysts may be used alone, or two or more of these may be used in combination.

### EXPLANATION OF SYMBOLS

- 10, 20, 30: Edge member
- 100, 200, 300: Honeycomb structured body
- 101, 201, 301: Adhesive layer
- 101a: Adhesive paste layer
- 102, 202, 302: Coating layer
- 103, 204, 303: Ceramic block
- 110, 210, 310, 320: Honeycomb fired body
- 110a, 210a, 310a, 320a, 320b, 320c, 320d: Side face
- 110b, 210b, 310b, 320e: End face
- 111, 211, 311: Cell
- 112, 232, 322: Plug
- 113, 213, 323: Cell wall
- G: Exhaust gas

## Claims

1. A honeycomb structured body comprising:
honeycomb fired bodies each having a large number of cells longitudinally disposed in parallel with each other with a cell wall interposed therebetween, and each having side faces and end faces;
adhesive layers disposed on the side faces and each adhesive layer bonding the honeycomb fired bodies to each other; and
edge members disposed on the side faces,
each side face that contacts the adhesive layer having a side A that is shared with one of the end faces,
each edge member including an inorganic material, having a substantially quadrangular pillar shape with a side X that has substantially the same width as the side A, and being disposed such that the side X is brought close to the end face.

2. The honeycomb structured body according to claim 1,
wherein
the edge members are disposed on both edge portions of every side face with the adhesive layer formed thereon of the honeycomb fired bodies such that the side X is shared with the end face of the honeycomb fired body.

3. The honeycomb structured body according to claim 1 or 2,
wherein
the edge member includes inorganic particles B and inorganic fibers B.

4. The honeycomb structured body according to any one of claims 1 to 3,
wherein
the edge member further includes solids content of an inorganic binder.

5. The honeycomb structured body according to any one of claims 1 to 4,
wherein
the edge member has substantially the same composition as the adhesive layer.

6. The honeycomb structured body according to any one of claims 3 to 5,
wherein
the edge member further includes inorganic particles D or a layered inorganic material.

7. The honeycomb structured body according to any one of claims 1 to 6,
wherein
a honeycomb fired body that is located at a peripheral portion of the honeycomb structured body has a peripheral wall on a peripheral portion of the honeycomb fired body.

8. A method for manufacturing a honeycomb structured body that includes honeycomb fired bodies each having a large number of cells longitudinally disposed in parallel with each other with a cell wall interposed therebetween and each having side faces and end faces, adhesive layers disposed on the side faces and each adhesive layer bonding the honeycomb fired bodies, and edge members disposed on the side faces,
the method comprising:
disposing the edge members, each edge member has a substantially quadrangular pillar shape having a side X, on the side faces, each side face having a side A that is shared with one of the end faces and that has substantially the same width as the side X, such that the side X is brought close to the side A;
manufacturing a honeycomb aggregate by bonding the honeycomb fired bodies with the edge members disposed thereon by interposing adhesive paste layers; and
solidifying the adhesive paste layers to form the adhesive layers.

9. The method for manufacturing a honeycomb structured body according to claim 8,
wherein
the manufacturing a honeycomb aggreagate comprises:
applying an adhesive paste to one of the side faces of a first one of the honeycomb fired bodies with the edge members disposed thereon;
bonding one of the side faces of a second one of the honeycomb fired bodies to the adhesive paste applied to the one of the side faces of the first one of the honeycomb fired bodies; and
repeating the applying and the bonding to manufacture a honeycomb aggregate.

10. The method for manufacturing a honeycomb structured body according to claim 8,
wherein
the manufacturing a honeycomb aggreagate comprises:
jointing the honeycomb fired bodies with the edge members disposed thereon by interposing the edge members to manufacture a honeycomb jointed body;
housing the honeycomb jointed body in a jointed body-housing container that is a part of an adhesive-filling apparatus; and
filling an adhesive paste into gaps formed between the honeycomb fired bodies of the honeycomb jointed body to form layers to be adhesive layers.

11. The method for manufacturing a honeycomb structured body according to claim 8,
wherein
the manufacturing a honeycomb aggreagate comprises:
jointing the honeycomb fired bodies with the edge members disposed thereon by interposing the edge members to manufacture a honeycomb jointed body;
preparing a jointed body-housing container that is a part of an adhesive-filling apparatus and that is designed to have a size such that the honeycomb jointed body and the jointed body-housing container form a gap having a predetermined distance therebetween;
housing the honeycomb jointed body in the jointed body-housing container to form the gap having a predetermined distance between the honeycomb jointed body and the jointed body-housing container; and
filling an adhesive paste into gaps between the honeycomb fired bodies of the honeycomb jointed body and into the gap between the honeycomb jointed body and the jointed body-housing container to form layers to be adhesive layers and a layer to be a coating layer.

12. The method for manufacturing a honeycomb structured body according to any one of claims 8 to 11,
wherein
the edge members are disposed on both edge portions of every side face with the adhesive layer formed thereon of the honeycomb fired bodies such that a side X is shared with the end face of the honeycomb fired body.

13. The method for manufacturing a honeycomb structured body according to any one of claims 8 to 12,
wherein
the edge member is bonded to the side face by interposing the adhesive paste.

14. The method for manufacturing a honeycomb structured body according to any one of claims 8 to 13,
wherein
the edge member is a highly viscous paste.

15. The method for manufacturing a honeycomb structured body according to any one of claims 8 to 14,
wherein
the edge member includes inorganic particles B and inorganic fibers B.

16. The method for manufacturing a honeycomb structured body according to any one of claims 8 to 15,
wherein
the edge member further includes an inorganic binder.

17. The method for manufacturing a honeycomb structured body according to any one of claims 8 to 16,
wherein
the edge member has substantially the same composition as the adhesive layer.

18. The method for manufacturing a honeycomb structured body according to any one of claims 15 to 17,
wherein
the edge member further includes inorganic particles D or a layered inorganic material.

19. The method for manufacturing a honeycomb structured body according to any one of claims 8 to 18,
wherein
a honeycomb fired body that is located at a peripheral portion of the honeycomb structured body has a peripheral wall on a peripheral portion of the honeycomb fired body.

20. The method for manufacturing a honeycomb structured body according to any one of claims 8 to 10 and 12 to 19, further comprising:
cutting the honeycomb aggregate to form a peripheral portion after the adhesive layer is solidified.

21. The method for manufacturing a honeycomb structured body according to claim 10 or 20, further comprising:
forming a coating layer on the periphery after the cutting.

22. The method for manufacturing a honeycomb structured body according to any one of claims 8 to 21,
wherein
the edge member is a paste having a viscosity of 60 to 100 Pa·s.

23. The method for manufacturing a honeycomb structured body according to any one of claims 8 to 21,
wherein
the edge member is a solidified member or a fired member having a predetermined shape.

## Patentansprüche

1. Wabenstrukturkörper mit:
gebrannten Wabenkörpern, die jeweils eine große Zahl von Zellen aufweisen, die parallel zueinander mit einer dazwischen eingefügten Zellwand längs angeordnet sind, und jeweils Seitenflächen und Endflächen aufweisen;
Klebstoffschichten, die an den Seitenflächen angeordnet sind und wobei die Klebstoffschichten jeweils die gebrannten Wabenkörper miteinander verbinden; und
Kantenelementen, die an den Seitenflächen angeordnet sind, wobei
jede Seitenfläche, die mit der Klebstoffschicht in Kontakt steht, eine Seite A aufweist, die mit einer der Endflächen geteilt wird,
jedes Kantenelement anorganisches Material aufweist und eine im Wesentlichen viereckige Säulenform mit einer Seite X aufweist, die im Wesentlichen die gleiche Breite wie die Seite A aufweist und so angeordnet ist, dass die Seite X nahe an die Endfläche gebracht ist.

2. Wabenstrukturkörper nach Anspruch 1, wobei
die Kantenelemente so an beiden Kantenabschnitten jeder Seitenfläche der gebrannten Wabenkörper mit der darauf ausgebildeten Klebstoffschicht angeordnet sind, dass die Seite X mit der Endfläche des gebrannten Wabenkörpers geteilt wird.

3. Wabenstrukturkörper nach Anspruch 1 oder 2, wobei
das Kantenelement anorganische Partikel B und anorganische Fasern B aufweist.

4. Wabenstrukturkörper nach einem der Ansprüche 1 bis 3, wobei
das Kantenelement einen Feststoffgehalt eines anorganischen Binders aufweist.

5. Wabenstrukturkörper nach einem der Ansprüche 1 bis 4, wobei
das Kantenelement im Wesentlichen die gleiche Zusammensetzung wie die Klebstoffschicht aufweist.

6. Wabenstrukturkörper nach einem der Ansprüche 3 bis 5, wobei
das Kantenelement ferner anorganische Partikel D oder ein anorganisches geschichtetes Material aufweist.

7. Wabenstrukturkörper nach einem der Ansprüche 1 bis 6, wobei
der gebrannte Wabenstrukturkörper, der an einem Umfangsabschnitt des Wabenstrukturkörpers angeordnet ist, an einem Umfangsabschnitt des gebrannten Wabenkörpers eine Umfangswand aufweist.

8. Verfahren zum Herstellen eines Wabenstrukturkörpers, der gebrannte Wabenkörper, die jeweils eine große Zahl von Zellen aufweisen, die parallel zu einander mit einer dazwischen eingefügten Zellwand längs angeordnet sind und jeweils Seitenflächen und Endflächen aufweisen, Klebstoffschichten, die an den Seitenflächen angeordnet sind und wobei die Klebstoffschichten jeweils die gebrannten Wabenkörper miteinander verbinden und Kantenelemente aufweist, die an den Seitenflächen angeordnet sind,
wobei das Verfahren aufweist:
Anordnen der Kantenelemente, wobei jedes Kantenelement eine im Wesentlichen viereckige Säulenform mit einer Seite X an den Seitenflächen aufweist, jede Seitenfläche eine Seite A aufweist, die mit einer der Endflächen geteilt wird und die im Wesentlichen die gleiche Breite wie die Seite X aufweist, sodass die Seite X nahe an die Seite A gebracht wird;
Herstellen eines Wabenaggregats durch Verbinden der gebrannten Wabenkörper, mit den darauf durch Einfügen von Klebstoffpastenschichten angeordneten Kantenelementen; und
Verfestigen der Klebstoffpastenschichten, um die Klebstoffschichten auszubilden.

9. Verfahren zum Herstellen eines Wabenstrukturkörpers nach Anspruch 8, wobei
die Herstellung eines Wabenaggregats aufweist:
Aufbringen einer Klebstoffpaste auf eine der Seitenflächen eines ersten gebrannten Wabenkörpers mit den darauf angeordneten Kantenelementen;
Verbinden einer der Seitenflächen eines zweiten gebrannten Wabenkörpers mit der Klebstoffpaste, die auf die eine der Seitenflächen des ersten gebrannten Wabenkörpers aufgebracht wurde; und
Wiederholen des Aufbringens und des Verbindens, um ein Wabenaggregat herzustellen.

10. Verfahren zum Herstellen eines Wabenstrukturkörpers nach Anspruch 8, wobei
das Herstellen eines Wabenaggregats aufweist:
Fügen der gebrannten Wabenkörper mit den darauf angeordneten Kantenelementen durch Einfügen der Kantenelemente, um einen gefügten Wabenkörper herzustellen; und
Aufnehmen des gefügten Wabenkörpers in einem Behälter für den gefügten Wabenkörper, der Teil einer Klebstofffüllvorrichtung ist; und
Füllen einer Klebstoffpaste in Spalte, die zwischen den gebrannten Wabenkörpern des gefügten Wabenkörpers ausgebildet wurden, um Schichten als Klebstoffschichten auszubilden.

11. Verfahren zum Herstellen eines Wabenstrukturkörpers nach Anspruch 8, wobei
die Herstellung eines Wabenaggregats aufweist:
Fügen der gebrannten Wabenkörper mit den darauf angeordneten Kantenelementen durch Einfügen der Kantenelemente, um einen gefügten Wabenkörper herzustellen;
Präparieren eines Behälters eines gefügten Körpers, der ein Teil einer Klebstofffüllvorrichtung ist und der ausgestaltet ist, eine Größe so aufzuweisen, dass der gefügte Wabenkörper und der Behälter für einen gefügten Körper einen Spalt mit einem vorbestimmten Abstand dazwischen ausbilden;
Einbringen des gefügten Wabenkörpers in den Behälter des gefügten Körper, um den Spalt mit dem vorbestimmten Abstand zwischen dem gefügten Wabenkörper und dem Behälter des gefügten Körpers auszubilden; und
Füllen einer Klebstoffpaste in Spalte zwischen den gebrannten Wabenkörpern des gefügten Wabenkörpers und in den Spalt zwischen dem gefügten Wabenkörper und dem Behälter des gefügten Körpers, um Schichten als Klebstoffschichten und eine Schicht als eine Beschichtungsschicht auszubilden.

12. Verfahren zum Herstellen eines Wabenstrukturkörpers nach einem der Ansprüche 8 bis 11, wobei
die Kantenelemente an beiden Kantenabschnitten jeder Seitenfläche der gebrannten Wabenkörper mit der darauf ausgebildeten Klebstoffschicht so angeordnet werden, dass eine Seite X mit der Endfläche des gebrannten Wabenkörpers geteilt wird.

13. Verfahren zum Herstellen eines Wabenstrukturkörpers nach einem der Ansprüche 8 bis 12, wobei
das Kantenelement durch Einfügen der Klebstoffpaste mit der Seitenfläche verbunden wird.

14. Verfahren zum Herstellen eines Wabenstrukturkörpers nach einem der Ansprüche 8 bis 13, wobei
das Kantenelement eine hochviskose Paste ist.

15. Verfahren zum Herstellen eines Wabenstrukturkörpers nach einem der Ansprüche 8 bis 14, wobei
das Kantenelement anorganische Partikel B und anorganische Fasern B aufweist.

16. Verfahren zum Herstellen eines Wabenstrukturkörpers nach einem der Ansprüche 8 bis 15, wobei
das Kantenelement ferner einen anorganischen Binder aufweist.

17. Verfahren zum Herstellen eines Wabenstrukturkörpers nach einem der Ansprüche 8 bis 16, wobei
das Kantenelement im Wesentlichen die gleiche Zusammensetzung wie die Klebstoffschicht aufweist.

18. Verfahren zum Herstellen eines Wabenstrukturkörpers nach einem der Ansprüche 15 bis 17, wobei
das Kantenelement ferner anorganische Partikel D oder ein anorganisches geschichtetes Material aufweist.

19. Verfahren zum Herstellen eines Wabenstrukturkörpers nach einem der Ansprüche 8 bis 18, wobei
ein gebrannter Wabenkörper, der an einem Umfangsabschnitt des Wabenstrukturkörpers angeordnet ist, an einem Umfangsabschnitt des gebrannten Wabenkörpers eine Umfangswand aufweist.

20. Verfahren zum Herstellen eines Wabenstrukturkörpers nach einem der Ansprüche 8 bis 10 und 12 bis 19, ferner mit
Schneiden des Wabenaggregats nachdem die Klebstoffschicht verfestigt wurde, um einen Umfangsabschnitt auszubilden.

21. Verfahren zum Herstellen eines Wabenstrukturkörpers nach Anspruch 10 oder 20, ferner mit
Ausbilden einer Beschichtungsschicht auf dem Umfang, nach dem Schneiden.

22. Verfahren zum Herstellen eines Wabenstrukturkörpers nach einem der Ansprüche 8 bis 21, wobei
das Kantenelement eine Paste ist, die eine Viskosität von 60 bis 100 Pa·s aufweist.

23. Verfahren zum Herstellen eines Wabenstrukturkörpers nach einem der Ansprüche 8 bis 21, wobei
das Kantenelement ein verfestigtes Element oder ein gebranntes Element ist, das eine vorbestimmte Form aufweist.

## Revendications

1. Corps structuré en nid d'abeilles comprenant :
des corps cuits en nid d'abeilles ayant chacun un grand nombre de cellules disposées longitudinalement en parallèle les unes avec les autres avec une paroi cellulaire interposée entre celles-ci, et ayant chacun des faces latérales et des faces d'extrémité ;
des couches adhésives disposées sur les faces latérales et chaque couche adhésive collant les corps cuits en nid d'abeilles les uns aux autres ; et
des éléments de bord disposés sur les faces latérales,
chaque face latérale qui vient en contact avec la couche adhésive ayant un côté A qui est partagé avec l'une des faces d'extrémité,
chaque élément de bord comportant un matériau inorganique, ayant une forme de pilier essentiellement quadrangulaire avec un côté X qui a essentiellement la même largeur que celle du côté A, et étant disposé de sorte que le côté X soit amené à proximité de la face d'extrémité.

2. Corps structuré en nid d'abeilles selon la revendication 1, dans lequel
les éléments de bord sont disposés sur les deux parties de bord de chaque face latérale avec la couche adhésive formée sur celle-ci des corps cuits en nid d'abeilles de sorte que le côté X soit partagé avec la face d'extrémité du corps cuit en nid d'abeilles.

3. Corps structuré en nid d'abeilles selon la revendication 1 ou 2,
dans lequel
l'élément de bord comporte des particules inorganiques B et des fibres inorganiques B.

4. Corps structuré en nid d'abeilles selon l'une quelconque des revendications 1 à 3,
dans lequel
l'élément de bord comporte en outre une teneur en matières solides d'un liant inorganique.

5. Corps structuré en nid d'abeilles selon l'une quelconque des revendications 1 à 4,
dans lequel
l'élément de bord a essentiellement la même composition que celle de la couche adhésive.

6. Corps structuré en nid d'abeilles selon l'une quelconque des revendications 3 à 5,
dans lequel
l'élément de bord comporte en outre des particules inorganiques D ou un matériau inorganique disposé en couches.

7. Corps structuré en nid d'abeilles selon l'une quelconque des revendications 1 à 6,
dans lequel
un corps cuit en nid d'abeilles qui est situé au niveau d'une partie périphérique du corps structuré en nid d'abeilles a une paroi périphérique sur une partie périphérique du corps cuit en nid d'abeilles.

8. Procédé de fabrication d'un corps structuré en nid d'abeilles qui comporte des corps cuits en nid d'abeilles ayant chacun un grand nombre de cellules disposées longitudinalement en parallèle les unes avec les autres avec une paroi cellulaire interposée entre celles-ci et ayant chacun des faces latérales et des faces d'extrémité, des couches adhésives disposées sur les faces latérales et chaque couche adhésive collant les corps cuits en nid d'abeilles, et des éléments de bord disposés sur les faces latérales,
le procédé comprenant le fait :
de disposer les éléments de bord, chaque élément de bord a une forme de pilier essentiellement quadrangulaire ayant un côté X, sur les faces latérales, chaque face latérale ayant un côté A qui est partagé avec l'une des faces d'extrémité et qui a essentiellement la même largeur que celle du côté X, de sorte que le côté X soit amené à proximité du côté A ;
de fabriquer un agrégat en nid d'abeilles en collant les corps cuits en nid d'abeilles aux éléments de bord disposés sur ceux-ci en interposant des couches de pâte adhésive ; et
de solidifier les couches de pâte adhésive pour former les couches adhésives.

9. Procédé de fabrication d'un corps structuré en nid d'abeilles selon la revendication 8,
dans lequel
la fabrication d'un agrégat en nid d'abeilles comprend le fait :
d'appliquer une pâte adhésive à l'une des faces latérales d'un premier corps parmi les corps cuits en nid d'abeilles avec les éléments de bord disposés sur ceux-ci ;
de coller l'une des faces latérales d'un deuxième corps parmi les corps cuits en nid d'abeilles à la pâte adhésive appliquée à l'une des faces latérales du premier corps parmi les corps cuits en nid d'abeilles ; et
de répéter l'application et le collage pour fabriquer un agrégat en nid d'abeilles.

10. Procédé de fabrication d'un corps structuré en nid d'abeilles selon la revendication 8,
dans lequel
la fabrication d'un agrégat en nid d'abeilles comprend le fait :
d'assembler les corps cuits en nid d'abeilles aux éléments de bord disposés sur ceux-ci en interposant les éléments de bord pour fabriquer un corps assemblé en nid d'abeilles ;
de recevoir le corps assemblé en nid d'abeilles dans un récipient de réception d'un corps assemblé qui fait partie d'un appareil de remplissage en adhésif ; et
de remplir des espaces formés entre les corps cuits en nid d'abeilles du corps assemblé en nid d'abeilles avec une pâte adhésive pour former des couches devant être des couches adhésives.

11. Procédé de fabrication d'un corps structuré en nid d'abeilles selon la revendication 8,
dans lequel
la fabrication d'un agrégat en nid d'abeilles comprend le fait :
d'assembler les corps cuits en nid d'abeilles aux éléments de bord disposés sur ceux-ci en interposant les éléments de bord pour fabriquer un corps assemblé en nid d'abeilles ;
de préparer un récipient de réception d'un corps assemblé qui fait partie d'un appareil de remplissage en adhésif et qui est conçu pour avoir une taille telle que le corps assemblé en nid d'abeilles et le récipient de réception d'un corps assemblé forment un espace ayant une distance prédéterminée entre eux ;
de recevoir le corps assemblé en nid d'abeilles dans le récipient de réception d'un corps assemblé pour former l'espace ayant une distance prédéterminée entre le corps assemblé en nid d'abeilles et le récipient de réception d'un corps assemblé ; et
de remplir des espaces entre les corps cuits en nid d'abeilles du corps assemblé en nid d'abeilles et l'espace entre le corps assemblé en nid d'abeilles et le récipient de réception d'un corps assemblé avec une pâte adhésive pour former des couches devant être des couches adhésives et une couche devant être une couche de revêtement.

12. Procédé de fabrication d'un corps structuré en nid d'abeilles selon l'une quelconque des revendications 8 à 11,
dans lequel
les éléments de bord sont disposés sur les deux parties de bord de chaque face latérale avec la couche adhésive formée sur celle-ci des corps cuits en nid d'abeilles de sorte qu'un côté X soit partagé avec la face d'extrémité du corps cuit en nid d'abeilles.

13. Procédé de fabrication d'un corps structuré en nid d'abeilles selon l'une quelconque des revendications 8 à 12,
dans lequel
l'élément de bord est collé à la face latérale en interposant la pâte adhésive.

14. Procédé de fabrication d'un corps structuré en nid d'abeilles selon l'une quelconque des revendications 8 à 13,
dans lequel
l'élément de bord est une pâte hautement visqueuse.

15. Procédé de fabrication d'un corps structuré en nid d'abeilles selon l'une quelconque des revendications 8 à 14,
dans lequel
l'élément de bord comporte des particules inorganiques B et des fibres inorganiques B.

16. Procédé de fabrication d'un corps structuré en nid d'abeilles selon l'une quelconque des revendications 8 à 15,
dans lequel
l'élément de bord comporte en outre un liant inorganique.

17. Procédé de fabrication d'un corps structuré en nid d'abeilles selon l'une quelconque des revendications 8 à 16,
dans lequel
l'élément de bord a essentiellement la même composition que celle de la couche adhésive.

18. Procédé de fabrication d'un corps structuré en nid d'abeilles selon l'une quelconque des revendications 15 à 17,
dans lequel
l'élément de bord comporte en outre des particules inorganiques D ou un matériau inorganique disposé en couches.

19. Procédé de fabrication d'un corps structuré en nid d'abeilles selon l'une quelconque des revendications 8 à 18,
dans lequel
un corps cuit en nid d'abeilles qui est situé au niveau d'une partie périphérique du corps structuré en nid d'abeilles a une paroi périphérique sur une partie périphérique du corps cuit en nid d'abeilles.

20. Procédé de fabrication d'un corps structuré en nid d'abeilles selon l'une quelconque des revendications 8 à 10 et 12 à 19, comprenant en outre le fait :
de couper l'agrégat en nid d'abeilles pour former une partie périphérique après que la couche adhésive est solidifiée.

21. Procédé de fabrication d'un corps structuré en nid d'abeilles selon la revendication 10 ou 20, comprenant en outre le fait :
de former une couche de revêtement sur la périphérie après la coupe.

22. Procédé de fabrication d'un corps structuré en nid d'abeilles selon l'une quelconque des revendications 8 à 21,
dans lequel
l'élément de bord est une pâte ayant une viscosité allant de 60 à 100 Pa.s.

23. Procédé de fabrication d'un corps structuré en nid d'abeilles selon l'une quelconque des revendications 8 à 21,
dans lequel
l'élément de bord est un élément solidifié ou un élément cuit ayant une forme prédéterminée.
